# FASCICULE DE BREVET EUROPEEN

(11) **EP 3 671 470 B1**
(45) Date de publication et mention de la délivrance du brevet: **19.05.2021**
(21) Numéro de dépôt: 19216520.7
(22) Date de dépôt: 16.12.2019
(51) Int. Cl.: G06F 12/0802, G06F 12/14, G06F 21/55, G06F 12/0864, G06F 9/4401, G06F 12/128, G06F 21/79

(54) **PROCÉDÉ DE GESTION D'UNE MÉMOIRE CACHE D'UN CALCULATEUR ÉLECTRONIQUE**
STEUERUNGSVERFAHREN EINES CACHE-SPEICHERS EINES ELEKTRONISCHEN RECHNERS
METHOD FOR MANAGING AN ELECTRONIC COMPUTER CACHE MEMORY

(30) Priorité: 17.12.2018 FR 1873009
(43) Date de publication de la demande: 24.06.2020
(73) Titulaire: Commissariat à l'énergie atomique et aux énergies alternatives, 75015 Paris (FR)
(72) Inventeur: HISCOCK, Thomas, 38054 Grenoble Cedex 09 (FR); EL MAJIHI, Mustapha, 38054 Grenoble Cedex 09 (FR); SAVRY, Olivier, 38054 Grenoble Cedex 09 (FR)
(74) Mandataire: Colombo, Michel

(56) Documents cités:
- JP-A- 2012 023 618
- US-A1- 2012 297 110
- US-A1- 2016 170 889
- US-A1- 2018 046 808
- ZHENGHONG WANG ET AL: "New cache designs for thwarting software cache-based side channel attacks", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, vol. 35, no. 2, 9 juin 2007 (2007-06-09), pages 494-505, XP058224816, ISSN: 0163-5964, DOI: 10.1145/1273440.1250723

## Description

L'invention concerne un procédé et une unité de gestion d'une mémoire cache d'un calculateur électronique.

Les mémoires caches sont utilisées pour qu'un processus exécuté par un microprocesseur puisse accéder plus rapidement à des informations enregistrées initialement dans la mémoire principale.

Dans cette demande, par « processus », on désigne aussi bien un programme qu'une routine de ce programme ou tout autre logiciel exécuté par le microprocesseur et susceptible de lire ou d'écrire dans la mémoire cache.

L'état de la mémoire cache dépend fortement des adresses qui ont été accédées par le ou les processus exécutés par le microprocesseur. Par ailleurs, l'état de la mémoire cache à un instant donné peut assez facilement être observé par un processus tiers exécuté par le microprocesseur ou simplement en mesurant les temps d'accès à la mémoire cache.

Ces caractéristiques d'une mémoire cache ont été exploitées pour développer des attaques connues sous le terme de « attaques par canaux auxiliaires » (« Side Channel Attack » en anglais). Ces attaques permettent de révéler des informations secrètes traitées par un processus exécuté ou de modifier le fonctionnement du processus exécuté pour contourner des mesures de sécurité. Par exemple, une information secrète est une clé cryptographique utilisée pour chiffrer ou déchiffrer des informations. Une mesure de sécurité est, par exemple, la saisie d'un code PIN.

Pour cela, les attaques par canaux auxiliaires observent l'état de la mémoire cache alors que le processus attaqué s'exécute pour déterminer la ou les adresses accédée(s) par ce processus attaqué. Les adresses accédées dépendent de données secrètes traitées par le processus attaqué. Ainsi, connaître les adresses accédées par le processus attaqué permet d'obtenir des informations sur ces données secrètes. En général, ces attaques supposent l'exécution d'un processus malveillant en parallèle du processus attaqué. Ce processus malveillant doit pouvoir accéder à des adresses précises de la mémoire cache.

Pour augmenter la robustesse de la mémoire cache vis-à-vis de ces attaques, il a déjà été proposé de partitionner la mémoire cache en plusieurs partitions distinctes associées chacune à un processus respectif. La partition associée à un processus particulier est alors uniquement accessible par ce processus et ne peut pas être lue ou écrite par les autres processus exécutés en parallèle par le calculateur électronique. Ainsi, un processus malveillant ne peut pas accéder à la partition d'un autre processus et ne peut donc pas obtenir des informations sur le fonctionnement de cet autre processus. Toutefois, cette solution conduit à un usage peu efficace de la mémoire cache car les zones libres dans une partition ne peuvent pas être exploitées par d'autres processus pour y enregistrer des informations.

Une autre solution a été proposée dans l'article suivant : Zhenghong Wang et AI.: « New cache designs for thwarting software cache-based side channel attacks », ACM SIGARCH Computer architecture news, volume 35, pages 494-505, 2017.

La solution décrite dans cet article est intéressante car elle ne partitionne pas la mémoire cache. Plus précisément, cet article enseigne que lorsqu'un premier processus cherche à lire un mot à une adresse @r, il transmet une requête à la mémoire cache. Cette requête contient l'adresse @r. L'adresse @r contient une adresse @_{Si,r} d'un ensemble S_{i,r} de lignes de la mémoire cache susceptibles de contenir le mot recherché. Si le mot recherché ne se trouve pas dans cet ensemble S_{i,r} de lignes, alors cela provoque un défaut de cache plus connu sous le terme anglais de « miss ». En cas de défaut de cache, un ensemble de nouvelles lignes contenant le mot recherché est chargé dans la mémoire cache à partir de la mémoire principale du calculateur électronique. Normalement, les nouvelles lignes chargées sont enregistrées à la place des précédentes lignes de l'ensemble S_{i,r}. Toutefois, si les précédentes lignes de l'ensemble S_{i,r} avaient été chargées dans la mémoire cache par un second processus, différent du premier processus, alors une interférence externe est détectée. Dans ce cas et seulement dans ce cas, l'article de Zhenghong enseigne :
- qu'un autre ensemble S_{i,r}' de lignes est choisi de façon aléatoire dans la mémoire cache,
- les nouvelles lignes chargées sont enregistrées dans l'ensemble S_{i,r}' et non pas dans l'ensemble S_{i,r},
- les lignes de l'ensemble S_{i,r} sont marquées comme étant invalides, et
- l'adressage de la mémoire cache est modifié pour le premier processus seulement, pour faire maintenant correspondre l'adresse @r à l'ensemble S_{i,r}' et non plus à l'ensemble S_{i,r}.

Ainsi, l'observation de l'état de la mémoire cache, et en particulier de l'ensemble S_{i,r}, par un second processus ne révèle aucune information sur les informations traitées par le premier processus.

Le procédé décrit dans cet article accroît donc la robustesse de la mémoire cache vis-à-vis des attaques par canaux auxiliaires dans lesquels un processus malveillant est utilisé pour observer l'état de la mémoire cache. Par contre, il est relativement inefficace vis-à-vis des attaques par canaux auxiliaires qui observent l'état de la mémoire cache, par exemple, en mesurant les temps d'accès à celle-ci sans nécessairement utiliser pour cela l'exécution d'un processus malveillant par le même calculateur électronique. En effet, le temps d'accès à la mémoire cache est très différent dans les deux cas suivants :
- le mot recherché se trouve dans la mémoire cache, ce qui correspond à la situation connue sous le terme anglais de « hit », et
- le mot recherché ne se trouve pas déjà dans la mémoire cache, ce qui correspond à la situation connue sous l'expression « défaut de cache » ou sous le terme anglais de « miss ».

En cas de défaut de cache, le mot recherché doit d'abord être chargé, à partir de la mémoire principale, dans la mémoire cache avant de pouvoir être utilisé. Le temps d'accès à la mémoire cache est donc beaucoup plus long dans le cas d'un « miss » que dans le cas d'un « hit ». Ainsi, en observant les temps d'accès à un ensemble S_{i,r} particulier de lignes de la mémoire cache, il est possible d'identifier l'instant où un nouveau mot est chargé dans cet ensemble S_{i,r} et le nombre de fois où cet ensemble de lignes est accédé. En corrélant ces informations avec le fonctionnement du processus attaqué, certaines informations secrètes peuvent alors être déduites.

De l'état de la technique est également connu de :
- US2016/170889A1,
- US2012/297110A1,
- US2018/046808A1, et
- JP2012023618A.

L'invention vise à proposer un procédé de gestion de la mémoire cache d'un calculateur électronique plus robuste que celui décrit dans l'article de Zhenghong Wang et al.

À cet effet, l'invention a donc pour objet un procédé de gestion de la mémoire cache d'un calculateur électronique conforme à la revendication 1.

Les modes de réalisation de ce procédé peuvent comporter une ou plusieurs des caractéristiques des revendications dépendantes.

L'invention a également pour objet une unité de gestion d'une mémoire cache d'un calculateur électronique pour la mise en œuvre du procédé ci-dessus.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un calculateur électronique équipé d'une mémoire cache ;
- la figure 2 est une illustration schématique d'une unité de gestion de la mémoire cache du calculateur de la figure 1 ;
- la figure 3 est un organigramme d'un procédé de gestion de la mémoire cache du calculateur de la figure 1 ;
- la figure 4 est une illustration schématique d'un autre mode de réalisation possible pour l'unité de gestion de la mémoire cache du calculateur de la figure 1 ;
- la figure 5 est un organigramme d'un procédé de gestion de la mémoire cache à l'aide de l'unité de gestion de la figure 4.

Dans ces figures, les mêmes références sont utilisées pour désigner les mêmes éléments. Dans la suite de cette description, les caractéristiques et fonctions bien connues de l'homme du métier ne sont pas décrites en détail.

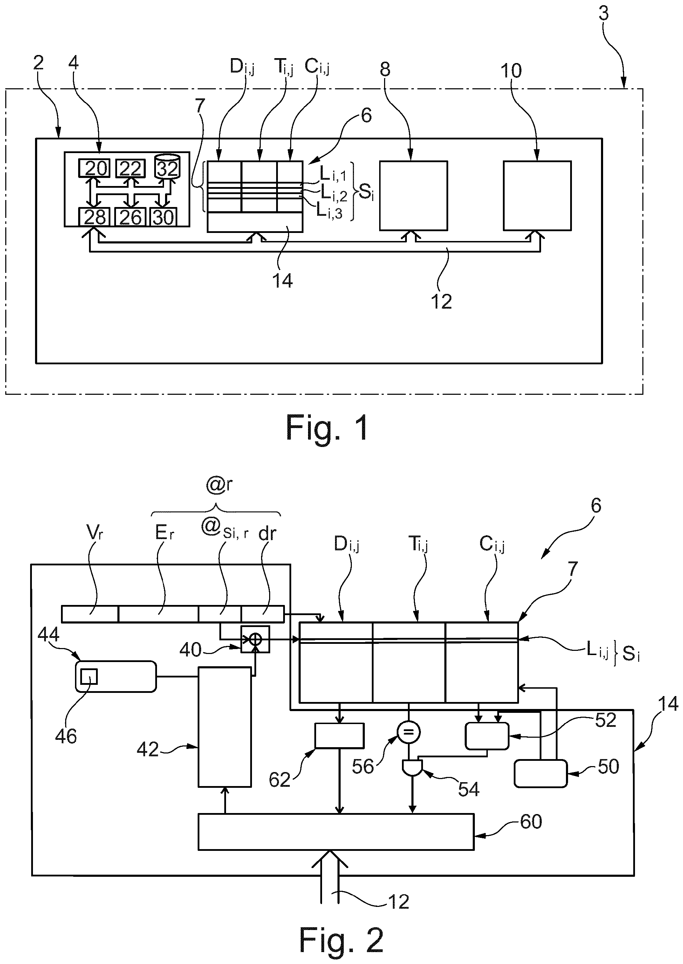

La figure 1 représente schématiquement l'architecture d'un calculateur électronique 2. Ce calculateur 2 est typiquement intégré dans un système 3 plus grand dont il contrôle et commande au moins une partie du fonctionnement. Le système 3 est par exemple un ordinateur, un téléphone mobile, un smartphone ou tout autre appareil électronique dont le fonctionnement est commandé, au moins en partie, par le calculateur 2.

Classiquement, le calculateur 2 comporte :
- au moins un microprocesseur 4,
- une mémoire cache 6,
- une mémoire principale 8,
- une mémoire de masse 10, et
- des bus 12 de transmission d'informations qui raccordent entre eux ces différents éléments du calculateur 2.

La mémoire cache 6 est typiquement plus rapide que la mémoire principale 8 qui est elle-même plus rapide que la mémoire de masse 10. La rapidité d'une mémoire correspond au temps d'accès nécessaire pour accéder à une information enregistrée dans cette mémoire. Actuellement, typiquement, le temps d'accès d'une mémoire cache est inférieur à 30 ns ou 20 ns et, généralement, supérieur à 1 ns. Le temps d'accès à une mémoire principale est aujourd'hui typiquement inférieur à 500 ns ou 100 ns et, généralement, supérieur à 30 ns ou 50 ns. Le temps d'accès à une mémoire de masse est aujourd'hui typiquement supérieur à 1 µs ou 10 µs et, généralement, inférieur à 10 ms.

Typiquement, la taille d'une mémoire du calculateur 2 est d'autant plus petite que cette mémoire est rapide. Ainsi, la taille de la mémoire cache 6 est inférieure à la taille de la mémoire principale 8 qui est elle-même inférieure à la taille de la mémoire de masse 10. La taille d'une mémoire est exprimée en octets. La taille de la mémoire cache 6 est, par exemple, inférieure à 4 Mo et, habituellement supérieure à 60 ko. La taille de la mémoire principale 8 est habituellement supérieure à 256 Mo ou 1 Go et, généralement, inférieure ou égale à 16 Go ou 32 Go. La taille de la mémoire de masse 10 est quant à elle habituellement supérieure à 4 Go ou 1 To.

Ici, les mémoires du calculateur 2 sont classées par temps d'accès croissant. Ainsi, par la suite, l'expression « mémoire de rang supérieur » désigne une mémoire dont le temps d'accès est supérieur à la mémoire courante.

Généralement, les mémoires 6 et 8 sont des mémoires volatiles à accès aléatoire. Par exemple, la mémoire 6 est une mémoire de type SRAM (« Static Random Access Memory »). La mémoire principale 8 est par exemple une mémoire de type DRAM (« Dynamic Random Access Memory »).

La mémoire de masse 10 est généralement une mémoire non volatile. De nombreuses technologies différentes existent pour réaliser une telle mémoire de masse. Par exemple, la mémoire 10 peut être une bande magnétique, un disque dur, un disque optique tel qu'un CD, un DVD ou un disque blue-ray, un disque magnéto-optique, une mémoire flash, une mémoire SSD (« Solid State Drive ») ou autres.

La mémoire 10 contient par exemple une copie de sauvegarde du code binaire des processus à exécuter par le microprocesseur 4. La mémoire 10 peut aussi contenir des copies des données à traiter par les différents processus susceptibles d'être exécutés par le microprocesseur 4. Typiquement, le code binaire des processus et les données à traiter sont, par exemple, chargés dans la mémoire 8 à partir de la mémoire 10 lors de la mise sous tension du calculateur 2 et/ou en réponse à une commande de réinitialisation du calculateur 2 ou lorsque l'exécution d'un nouveau processus par le calculateur 2 est déclenchée.

La mémoire 6 peut être une mémoire externe au microprocesseur 4 comme représenté sur la figure 1. Dans ce cas, la mémoire 6 est, par exemple, réalisée sur un substrat mécaniquement séparé du substrat sur lequel sont réalisés les différents éléments du microprocesseur 4.

Pour simplifier la description, on considère ici que la mémoire 6 comporte un seul niveau de mémoire cache, c'est-à-dire typiquement le niveau connu sous l'expression « cache L1 ». Toutefois, tout ce qui est décrit par la suite dans ce cas particulier, est transposable sans difficulté par l'homme du métier au cas des mémoires caches comportant plusieurs niveaux de mémoire cache.

Par la suite à défaut d'indication contraire, on désigne par le terme « mot » aussi bien une instruction ou portion d'instruction du code binaire d'un processus exécutable par le microprocesseur 4 qu'une donnée ou portion de donnée correspondant à une opérande sur laquelle opère une instruction exécutée par microprocesseur 4.

La mémoire cache 6 sert de stockage intermédiaire entre la mémoire principale 8 et le microprocesseur 4. Au lieu d'accéder directement à la mémoire principale 8 qui présente des latences importantes, le microprocesseur 4 va d'abord chercher si le mot est présent dans la mémoire cache. Il existe alors les deux cas de figure suivants
- Cas 1) : Le mot est présent dans la mémoire cache 6, ce qui correspond au cas connu sous le terme « hit » ou « cache hit ». Dans ce cas, le mot est directement transféré au microprocesseur 4 à partir de la mémoire cache 6. Les mémoires de rang supérieur à la mémoire 6 ne sont alors pas accédées pour obtenir ce mot.
- Cas 2) : Le mot est absent de la mémoire cache 6. Ce cas de figure correspond à celui connu sous le terme anglais de « miss » ou « cache miss ». Dans ce cas, la mémoire cache doit aller chercher dans une mémoire de rang supérieur, c'est-à-dire ici typiquement dans la mémoire principale 8, le mot absent. Ce cas de figure est ici appelé « défaut de cache ». Le défaut de cache conduit donc naturellement à un temps d'accès plus important au mot recherché.

La mémoire cache 6 comporte typiquement un support 7 d'enregistrement d'informations. Le support 7 est divisé en plusieurs lignes L_{i,j} de longueur fixe. Chaque ligne comporte un champ D_{i,j} de données. Chaque champ D_{i,j} est divisé en Nₘ mots de longueur fixe. Les longueurs d'un mot, d'un champ et d'une ligne sont exprimées par le nombre de bits qui les composent. Par exemple, la longueur d'un mot est typiquement égale à 32 bits ou 64 bits. Par la suite, la description est faite dans le cas particulier où la longueur d'un mot est égale à 32 bits. Chaque champ D_{i,j} comporte un nombre identique de mots. Par exemple, ici, chaque champ D_{i,j} comporte quatre mots. Ainsi, la longueur du champ D_{i,j} est de 128 bits.

Les lignes de la mémoire cache 6 sont regroupées en ensembles distincts Sᵢ. Ces ensembles Sᵢ sont connus sous le terme anglais de « Set ». Chaque ensemble Sᵢ contient W lignes L_{i,j}. Le nombre W est le même pour tous les ensembles Sᵢ. Par la suite, l'indice « i » identifie sans ambiguïté un ensemble Sᵢ parmi les autres ensembles de lignes que comporte la mémoire 6. Par exemple, l'indice i est un numéro d'ordre compris entre 1 et s, où s est un nombre entier égal à T/(W.L), où :
- T est la taille de la mémoire cache exprimée en octets,
- L est le nombre d'octets par ligne, et
- W est le nombre de lignes dans chaque ensemble Sᵢ.

L'indice « j » identifie sans ambiguïté une ligne particulière d'un ensemble Sᵢ. Ici, l'indice j est compris entre 1 et W. Ceci est représenté sur la figure 1 dans le cas particulier où W est égal à trois.

Dans ce mode de réalisation, la mémoire cache 6 est une mémoire associative à W voies ("way" en anglais), plus connue sous l'expression anglaise de « W-way associative ». Dans ce cas, le nombre entier W est supérieur ou égal à deux et généralement inférieur à 128 ou 64 ou 16.

La position de chaque ensemble Sᵢ dans la mémoire cache 6 est repérée par une adresse @_{Si} appelée « adresse d'ensemble de lignes ». Il existe donc ici s adresses @_{Si} différentes d'ensemble de lignes. Par la suite, le nombre de bits minimum nécessaires pour coder l'adresse @_{Si} d'un ensemble Sᵢ est noté n et l'ensemble qui contient toutes les adresses @_{Si} possibles est noté Eₛ.

La position d'un mot particulier dans le champ D_{i,j} est repérée par un indice « dᵣ » qui identifie la position d'un mot dans cette ligne. L'indice dᵣ est un nombre compris entre 1 et Nₘ. Typiquement, les mots d'un même champ D_{i,j} sont placés immédiatement les uns derrière les autres.

En plus du champ D_{i,j,} chaque ligne L_{i,j} comporte :
- une étiquette de lignes T_{i,j} appelée « tag » en anglais, et
- un compteur de lignes C_{i,j}.

L'étiquette T_{i,j} contient une valeur qui permet de sélectionner sans ambiguïté la ligne L_{i,j} qui contient le mot recherché parmi les W lignes L_{i,j} de l'ensemble Sᵢ. Pour cela, l'étiquette T_{i,j} est construite à partir des bits de l'adresse @r du mot recherché qui n'ont pas déjà été utilisés pour déterminer l'adresse @_{Si} de l'ensemble Si susceptible de contenir la ligne L_{i,j} et pour déterminer l'indice dᵣ. Par exemple, une fonction de hachage (« hash » en anglais) peut être appliquée à ces bits de l'adresse du mot recherché pour obtenir l'étiquette Tᵢ,ⱼ.

Le compteur Cᵢ,ⱼ contient une valeur qui permet de déterminer si la ligne L_{i,j} est obsolète ou non. La construction de la valeur du compteur Cᵢ,ⱼ et son utilisation sont décrites plus en détail plus loin.

Chaque ligne L_{i,j} peut comporter des champs additionnels comme un bit d'information qui permet de marquer cette ligne comme étant valide et, en alternance, invalide. Classiquement, une ligne L_{i,j} marquée comme invalide doit être traitée comme si elle ne contenait aucun mots. Ainsi, une ligne L_{i,j} marquée comme invalide est destinée à être effacée et remplacée par une autre ligne chargée depuis la mémoire principale 8.

Chaque ligne L_{i,j} peut aussi comporter un bit qui permet de marquer cette ligne L_{i,j} comme ayant été modifiée. Ce bit est souvent appelé "dirty" en anglais. Lorsqu'une ligne L_{i,j} est marquée comme modifiée, le champ D_{i,j} qu'elle contient est alors copié dans la mémoire principale 8 avant, par exemple, que cette ligne soit marquée comme invalide.

La mémoire cache 6 comporte aussi une unité électronique 14 de gestion. Cette unité 14 est notamment configurée pour :
- en réponse à une requête de lecture d'un mot dans la mémoire cache 6, envoyer le mot recherché à l'émetteur de la requête si ce mot a été trouvé dans la mémoire cache 6 et sinon, déclencher un défaut de cache, et
- en réponse à une requête d'écriture d'un mot dans la mémoire cache 6, remplacer l'ancienne valeur de ce mot enregistré sur le support 7 par sa nouvelle valeur et, dans le cas où le mot à écrire n'a pas pu être trouvé dans la mémoire cache 6, déclencher un défaut de cache.

Par exemple, lorsque l'unité 14 déclenche un défaut de cache, elle émet une requête vers une mémoire de rang supérieur, typiquement ici la mémoire principale 8, pour déclencher le chargement dans la mémoire cache 6 les lignes qui contiennent le mot recherché. L'unité 14 gère ensuite l'enregistrement des lignes qui lui sont fournies en réponse à sa requête.

Le microprocesseur 4 comporte ici notamment:
- une unité arithmétique et logique 20 ;
- un jeu 22 de registres ;
- un module de commande 26 ;
- une interface 28 d'entrée/sortie de données,
- un chargeur 30 d'instructions comportant un compteur ordinal,
- une file 32 d'instructions à exécuter.

A titre d'illustration, le microprocesseur 4 est conforme à l'architecture RISC (« Restricted Instruction Set Computer »).

Le chargeur 30 charge dans la file 32 la prochaine instruction à exécuter par l'unité 20 à partir de la mémoire 6 ou d'une mémoire de rang supérieur. Plus précisément, le chargeur 30 charge l'instruction sur laquelle pointe le compteur ordinal.

L'unité 20 est notamment configurée pour exécuter les unes après les autres les instructions chargées dans la file 32. Les instructions chargées dans la file 32 sont généralement systématiquement exécutées dans l'ordre où ces instructions ont été enregistrées dans cette file 32. L'unité 20 est aussi capable d'enregistrer le résultat de l'exécution de ces instructions dans un ou plusieurs des registres du jeu 22.

Le module 26 est configuré pour déplacer des données entre le jeu 22 de registres et l'interface 28. L'interface 28 est notamment apte à lire des mots depuis la mémoire 6 et, en alternance, à écrire des mots dans la mémoire 6. Ici, pour lire un mot, le microprocesseur 4 génère et envoie par l'intermédiaire de l'interface 28 une requête de lecture de ce mot. Cette requête de lecture comporte notamment une adresse @r physique ou virtuelle du mot à lire. L'adresse virtuelle d'un mot est l'adresse de ce mot dans l'espace mémoire du processus exécuté par le microprocesseur 4. Cette adresse virtuelle correspond à une adresse physique dans la mémoire principale 8 où est enregistré le mot recherché. Classiquement, c'est un module de conversion connu sous l'acronyme MMU (« Memory Management Unit ») qui se charge de la conversion des adresses virtuelles en adresses physiques au moment où cela devient nécessaire.

L'adresse @r comporte à cet effet :
- une adresse @_{Si,r} d'un ensemble Si de la mémoire cache 6 susceptible de contenir le mot à lire ;
- un indice dᵣ qui identifie la position du mot à lire dans le champ D_{i,j} des W lignes L_{i,j} de l'ensemble Si identifié par l'adresse @_{Si,r,} et
- une étiquette Tᵣ qui permet de sélectionner sans ambiguïté, parmi l'ensemble des W lignes L_{i,j} de l'ensemble Sᵢ correspondant à l'adresse @_{Si,r,} la ligne qui contient le mot à lire si cette ligne existe.

L'étiquette Tᵣ est typiquement construite en mettant en œuvre le même algorithme que celui mis en œuvre pour construire chacune des étiquettes T_{i,j} enregistrées dans la mémoire cache 6. Ainsi, si l'une des lignes L_{i,j} de l'ensemble Sᵢ contient le mot à lire, son étiquette T_{i,j} est identique à l'étiquette Tᵣ. Cela permet de l'identifier sans ambiguïté comme étant la ligne qui contient le mot à lire parmi les W lignes L_{i,j} de l'ensemble Sᵢ.

Une requête en écriture d'un mot dans la mémoire 6 est, par exemple, pratiquement identique à la requête en lecture sauf qu'elle comporte en plus une valeur numérique Vᵣ contenant la nouvelle valeur du mot à enregistrer dans la mémoire cache 6.

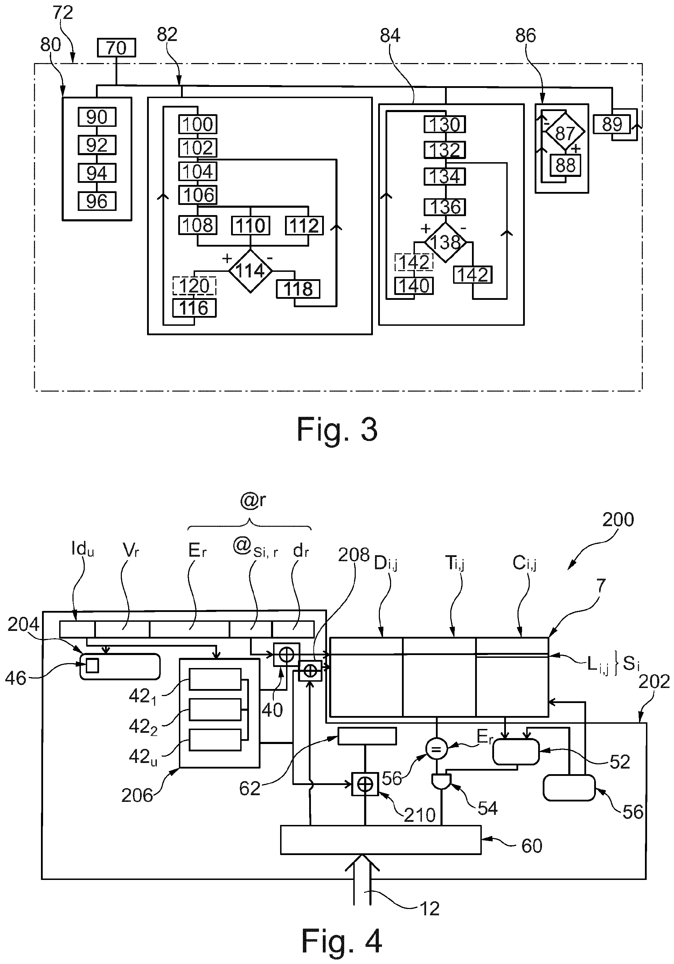

La figure 2 représente schématiquement un premier mode de réalisation possible pour l'unité 14 de gestion de la mémoire cache 6. L'unité 14 est configurée pour mettre en œuvre le procédé de gestion décrit plus en détail en référence à la figure 3.

L'unité 14 comporte des registres dans lesquels sont enregistrées les différentes données contenues dans la requête de lecture ou d'écriture reçue par la mémoire 6. Sur cette figure, les registres contenant l'étiquette Tᵣ, l'adresse @_{Si,r,} l'indice dᵣ et la valeur Vᵣ portent, respectivement, les références Tᵣ, @_{Si,r,} dᵣ et Vᵣ.

L'unité 14 comporte une fonction 40 de transformation de l'adresse @_{Si,r} en une adresse @_{Si,t} d'ensemble transformée. La fonction 40 est une fonction bijective qui associe à chaque adresse @_{Si,r} une et une seule adresse @_{Si,t}. Une telle fonction 40 est connue sous le terme de "permutation". Ainsi, quelle que soit l'adresse @_{Si,t,} cette adresse @_{Si,t} appartient à l'ensemble Eₛ. Plus précisément, la fonction 40 est conçue pour permuter au moins Pₑ % des adresse @_{Si,r}. Autrement dit, la fonction 40 associe à plus de Pₑ % des adresse @_{Si,r} contenues dans l'ensemble Eₛ, une adresse @_{Si,t} dont la valeur est différente de la valeur de l'adresse @_{Si,r} à laquelle elle est associée par cette fonction 40. Ici, le nombre Pₑ est supérieur à 50 et, de préférence, supérieur à 80 ou 90 ou 95. Idéalement, Pₑ est égal à 100.

La fonction 40 est une fonction paramétrée par la valeur d'un paramètre q. Ainsi, la valeur de l'adresse @_{Si,t} dépend non seulement de la valeur de l'adresse @_{Si,r} mais également de la valeur du paramètre q. Dès lors, à chaque fois que la valeur du paramètre q est modifiée, la fonction 40 est modifiée, c'est-à-dire qu'elle associe une nouvelle adresse @_{Si,t} à une même adresse @_{Si,r}. A chaque fois que le paramètre q est modifié, cette modification touche un groupe d'adresses @_{Si,r} contenant au moins Pₑ % des adresse @_{Si,r}. Ainsi, caprès avoir modifié la valeur du paramètre q, chacune des adresses @_{Si,r} de ce groupe est transformée, par la fonction 40, en une adresse @_{Si,t} différente de celle qui était obtenue avant la modification de la valeur du paramètre q.

Il existe un grand nombre de façons pour permuter des nombres d'un ensemble. Ici, la fonction 40 utilise simplement la relation suivante : @_{Si,t} = @_{Si,r} XOR q, où le symbole « XOR » est l'opération « ou exclusif ». Pour cela, la taille du paramètre q est ici égale à la taille de l'adresse @_{Si,r} et donc égale à n bits.

La valeur la plus récente du paramètre q est enregistrée en tête d'une file 42 contenant R + 1 registres. La taille de chacun des registres de la file 42 est égale à n bits. Cette file 42 fonctionne sur le principe du "premier entré, premier sorti" connu sous l'acronyme « FIFO » (« first in first out »). Ainsi, dans ce mode de réalisation, la file 42 mémorise à la fois la valeur la plus récente du paramètre q mais également ses R précédentes valeurs. Typiquement, le nombre R est un nombre entier compris 1 et Lmax_{R}. La limite supérieure Lmax_{R} est, de préférence, égale à la valeur au-delà de laquelle le temps mis pour essayer de trouver un mot dans la mémoire cache 6 en utilisant successivement toutes les valeurs du paramètre q enregistrées dans la file 42 devient supérieure au temps nécessaire pour lire le mot recherché à partir de la mémoire principale 8. Dès lors, typiquement, le nombre R est inférieur à 50 et, généralement inférieur à 16 ou 10. Ici, le nombre R est choisi égal à 8.

L'unité 14 comporte aussi un générateur 44 de nouvelles valeurs pour le paramètre q. À chaque fois que le générateur 44 génère une nouvelle valeur, celle-ci est enregistrée en tant que valeur la plus récente dans la file 42 et la valeur la plus ancienne du paramètre q contenue dans la file 42 est effacée.

Le générateur 44 est configuré pour déclencher de façon répétée la génération d'une nouvelle valeur du paramètre q au cours de l'exécution d'un même processus par le microprocesseur 4. Ainsi, la fonction 40 est modifiée de façon répétée alors même que les processus n'ont pas fini d'être exécutés. Ici, le générateur 44 déclenche la génération d'une nouvelle valeur du paramètre q à intervalles réguliers. Plus la durée de cet intervalle est courte, plus la robustesse du calculateur 2 vis-à-vis des attaques par canaux auxiliaires augmente. Par contre, plus cette durée est courte et plus le nombre de défauts de cache augmente, ce qui ralentit l'exécution des processus. La durée de cet intervalle est donc choisie pour obtenir un compromis acceptable entre la robustesse vis-à-vis des attaques par canaux auxiliaires et la rapidité d'exécution des processus. Ici, la génération d'une nouvelle valeur du paramètre q est déclenchée dès qu'un compteur 46 de nombres d'accès à la mémoire cache 6 dépasse une limite Lmax₄₆. Généralement, la limite Lmax₄₆ est supérieure à 50 ou 100 et inférieure à 50 000 ou 20 000. Ici, la limite Lmax₄₆ est comprise entre 100 et 20 000 et, de préférence, entre 100 et 5 000 ou entre 100 et 1 000. Dans ce mode de réalisation, la limite Lmax₄₆ est égale à 1 000. À chaque fois que la limite Lmax₄₆ est atteinte, le générateur 44 réinitialise le compteur 46 d'accès à zéro.

Dans ce mode de réalisation, le générateur 44 tire de façon aléatoire ou pseudo-aléatoire chaque nouvelle valeur du paramètre q dans un ensemble E_{q} de 2ⁿ valeurs comprises entre 0 et 2ⁿ-1.

L'unité 14 comporte aussi un compteur 50 de modification de la fonction 40. Ce compteur 50 est incrémenté d'un pas régulier à chaque fois qu'une nouvelle valeur du paramètre q est générée. Typiquement, le pas d'incrément est égal à un. Par exemple, pour cela, l'incrémentation du compteur 50 est déclenchée par le générateur 44 à chaque fois qu'il génère une nouvelle valeur du paramètre q. Lorsque le compteur 50 atteint une limite maximale Lmax₅₀, il génère un signal de dépassement (« overflow » en anglais) et revient à sa valeur initiale, c'est-à-dire ici sa valeur nulle.

Dans ce mode de réalisation, la valeur de la limite Lmax₅₀ est supérieur au nombre R et, de préférence, très supérieure au nombre R. Par exemple, la limite Lmax₅₀ est choisie supérieure à 100 ou 500 ou 1000.

Le compteur 50 est raccordé à une entrée d'un comparateur 52. Le comparateur 52 compare la valeur actuelle du compteur 50 à la valeur du compteur de lignes C_{i,j} de la ligne sélectionnée à l'aide de l'adresse @_{Si,t}. En cas de concordance entre ces deux valeurs, le comparateur 52 envoie un signal de concordance à un circuit logique 54. Dans le cas contraire, le comparateur 52 envoie un signal d'absence de concordance au circuit 54. Ici, il y a concordance entre la valeur du compteur C_{i,j} et la valeur du compteur 50 si la valeur du compteur C_{i,j} est inférieure ou égale à Cₘ et supérieure ou égale à Cₘ-M, où :
- Cₘ est la valeur actuelle du compteur 50, et
- M est un nombre entier constant, supérieur ou égale à zéro.

De préférence, le nombre M est choisi égal ou inférieur au nombre R. Ici, le nombre M est égal au nombre R. La valeur du compteur C_{i,j} d'une ligne L_{i,j} est égale à la valeur du compteur 50 au moment où cette ligne L_{i,j} a été enregistrée dans la mémoire cache 6. Ainsi, il y a concordance entre les valeurs du compteur C_{i,j} et du compteur 50 uniquement si, entre l'instant où la ligne L_{i,j} a été enregistrée dans la mémoire cache 6 et l'instant où le comparateur 52 compare les valeurs du compteur C_{i,j} et du compteur 50, la fonction 40 a été modifiée au maximum M fois.

Le circuit 54 comporte une autre entrée raccordée à une sortie d'un autre comparateur 56. Le comparateur 56 compare l'étiquette Tᵣ reçue aux étiquettes T_{i,j} des lignes de l'ensemble Sᵢ sélectionné à l'aide de l'adresse @_{Si,t}. Si l'une des étiquettes T_{i,j} de l'ensemble Sᵢ sélectionné correspond à l'étiquette Tᵣ, alors un signal de sélection de cette ligne L_{i,j} comme étant celle qui contient le mot recherché est généré. Dans le cas contraire, c'est-à-dire qu'aucune des étiquettes T_{i,j} de l'ensemble Sᵢ sélectionné ne correspond à l'étiquettes Tᵣ, un signal d'absence de sélection est généré. Une étiquette T_{i,j} correspond à l'étiquette Tᵣ si ces deux étiquettes sont identiques.

Le signal de sélection est, en alternance, le signal d'absence de sélection et est reçu par le circuit 54.

Le circuit 54 transmet à un automate 60 un signal de succès qui indique qu'une ligne L_{i,j} correspondant à l'adresse @r reçue a été trouvée uniquement si :
- pour cette ligne L_{i,j}, le comparateur 56 a généré un signal de sélection, et
- pour cette même ligne L_{i,j}, le comparateur 52 a généré un signal de concordance.

Ce signal de succès correspond donc au cas d'un « hit ». Dans les autres cas, un signal de défaut de cache est transmis à l'automate 60.

En parallèle du comparateur 56, l'unité comporte un extracteur 62 de mots. Cet extracteur 62 extrait du champ D_{i,j} de la même ligne L_{i,j} que celle actuellement traitée par le comparateur 56, le mot situé à la position repérée par l'indice reçu dᵣ.

L'automate 60 est notamment configuré pour :
- sélectionner les W lignes L_{i,j} de l'ensemble Sᵢ situé à l'adresse @_{Si,t} construite par la fonction 40 à partir de l'adresse @_{Si,r} reçue,
- si l'une des W lignes L_{i,j} sélectionnée déclenche un signal de succès, alors l'automate 60 déclenche en réponse, dans le cas d'une requête en lecture, la transmission du mot extrait, et, dans le cas d'une requête en écriture, l'écriture de la valeur Vᵣ reçue à l'emplacement du mot situé à la position repérée par l'indice dᵣ dans le champ D_{i,j} de cette ligne,
- sélectionner une précédente valeur du paramètre q dans la file 42, et
- charger à partir de la mémoire principale 8 et enregistrer dans la mémoire cache 6 un nouvel ensemble de lignes contenant le mot correspondant à l'adresse @r contenue dans la requête reçue si ce mot n'a pas pu être trouvé dans la mémoire cache 6.

Le fonctionnement du calculateur 2 et de la mémoire cache 6 vont maintenant être décrits en référence au procédé de la figure 3.

Lors d'une phase 70 d'initialisation, le générateur 44 génère une valeur initiale du paramètre q et l'enregistre dans la file 42. La valeur du compteur 50 est initialisée à zéro. Éventuellement, l'ensemble de lignes de la mémoire cache 6 sont marquées comme étant invalides.

Ensuite, une phase 72 d'exécution de processus par le calculateur 2 est déclenchée. Le calculateur 2 a ici la capacité d'exécuter simultanément plusieurs processus. Pour cela, par exemple, le calculateur 2 exécute un système d'exploitation qui permet d'ordonnancer dans le temps l'exécution simultanée de ces différents processus par le microprocesseur 4. Grâce à cela, tous les processus sont exécutés en alternance par ce même microprocesseur 4. De même, la mémoire cache 6 est accessible et utilisable par tous les processus simultanément exécutés. En particulier, pour augmenter l'efficacité et la rapidité d'exécution de chacun des processus, chacun d'entre eux peut lire et écrire des mots dans n'importe quel emplacement du support 7. Autrement dit, le support 7 n'est pas ici divisé en plusieurs partitions dont l'usage de chacune de ces partitions serait réservé à un seul processus particulier.

L'exécution de plusieurs processus par un microprocesseur est bien connue de l'homme du métier. Ainsi, seuls les accès et la gestion de la mémoire cache 6 sont décrits plus en détail par la suite. Plus précisément, on décrit par la suite :
- une étape 80 d'enregistrement de lignes L_{i,j} dans la mémoire cache 6, puis
- une étape 82 d'accès en lecture, et enfin,
- une étape 84 d'accès en écriture à cette mémoire cache 6.

De plus, en parallèle de ces étapes 80, 82 et 84, au cours de l'exécution des processus par le microprocesseur 4, l'unité 14 exécute de façon répétée une étape 86 de modification de la fonction 40. Lors de cette étape 86, à chaque accès à la mémoire cache 6, le compteur 46 est incrémenté lors d'une opération 87 et la nouvelle valeur du compteur 46 est comparée à la limite Lmax₄₆. Si la limite Lmax₄₆ est atteinte, lors d'une opération 88, le générateur 44 génère une nouvelle valeur du paramètre q. Cette nouvelle valeur est enregistrée dans la file 42 en tant que valeur la plus récente du paramètre q. Lors de l'opération 88, le compteur 50 est également incrémenté d'un pas et le compteur 46 est réinitialisé à sa valeur nulle.

La valeur la plus récente du paramètre q est la valeur par défaut utilisée pour construire l'adresse @_{Si,t} à partir de l'adresse @_{Si,r}. Ainsi, lors de l'exécution d'un processus, l'adressage de la mémoire cache est plusieurs fois modifié. De plus, chaque modification impacte simultanément la majorité des adresses d'ensemble. Ainsi, l'adressage de la mémoire cache 6 avant la modification de la fonction 40 est très différents de l'adressage de la mémoire 6 après cette modification. Dès lors, cela rend très difficile la mise en œuvre des attaques par canaux auxiliaires qui essaient d'obtenir des informations secrètes à partir de l'observation des accès d'un processus à cette mémoire cache 6.

Par exemple, lors d'une première opération, un premier processus cryptographique exécuté par le microprocesseur 4 lit une clé cryptographique secrète Kᵣ à une adresse @r. L'adresse @r contient l'étiquette Tᵣ, l'adresse @_{Si,r} et l'indice dᵣ. L'adresse @_{Si,r} est alors transformée, par la fonction 40, en une adresse @_{S1,t}. Cette requête déclenche ainsi un accès à des premières lignes L_{i,j} d'un ensemble S_{1,t} situé dans la mémoire 6 à l'adresse @_{S1,t}. Ultérieurement, la fonction 40 est modifiée en changeant la valeur la plus récente du paramètre q. Après cette modification, l'adresse @_{Si,r} est transformée, par la fonction 40, en une adresse @_{S2,t} différente de l'adresse @_{S1,t}. La même opération de lecture de la clé Kᵣ déclenche donc un accès à des secondes lignes L_{2,j} d'un second ensemble S_{2,t} situé à l'adresse @_{S2,t}. Il est donc plus difficile d'obtenir une information sur le type et la nature des informations accédées en mémoire cache en observant seulement les accès à cette mémoire cache 6.

Suite à une modification de la fonction 40, le mot qui auparavant était recherché dans l'ensemble S_{1,t} est maintenant recherché dans l'ensemble S_{2,t}. Toutefois, les lignes de l'ensemble S_{1,t} ne sont pas déplacées vers l'ensemble S_{2,t} à chaque fois que la fonction 40 est modifiée. Seules l'adressage de la mémoire cache est modifié. Cela conduit à la situation suivante : avant la modification de la fonction 40, le mot recherché correspondant à l'adresse @r a été enregistré dans l'ensemble S_{1,t}. Dès lors, avant la modification de la fonction 40, ce mot est rapidement retrouvé dans la mémoire cache à partir de l'adresse @r car la fonction 40 permet d'obtenir l'adresse @_{S1,t} à partir de l'adresse @_{Si,r}. Après la modification de la fonction 40, pour la même adresse @r, la fonction 40 génère une autre adresse @_{S2,t} différente de l'adresse @_{S1,t}. Puisque les lignes de l'ensemble S_{1,t} n'ont pas été déplacées vers l'ensemble S_{2,t}, le mot recherché ne se trouve pas dans l'ensemble S_{2,t} et un défaut de cache est déclenché.

Un premier effet secondaire lié à la modification de la fonction 40 est donc que cela accroît le nombre de défauts de cache pendant une période de temps qui suit immédiatement la modification de cette fonction 40. Cela ralentit temporairement l'exécution des processus pendant cette période.

On notera que déplacer les lignes de l'ensemble S_{1,t} vers l'ensemble S_{2,t} aurait évité ce défaut de cache. Toutefois, comme précédemment indiqué, la modification de la fonction 40 touche la majorité des adresses d'ensemble. Pour éviter ce défaut de cache, à chaque fois que la fonction 40 est modifiée, il faudrait donc déplacer la majorité des lignes de la mémoire cache 6. En pratique, un tel déplacement de la majorité des lignes de la mémoire cache prend beaucoup de temps et ralentirait de façon inacceptable l'exécution des processus par le calculateur 2. En fait, un tel déplacement de lignes est pire que le premier effet secondaire indiqué ci-dessus.

Un second effet secondaire lié à l'absence de déplacement des lignes de la mémoire cache 6 est que, suite à une modification de la fonction 40, il peut exister plusieurs exemplaires de la même ligne à différents emplacements dans la mémoire cache. Or, certains de ces exemplaires peuvent contenir des données obsolètes. Ceci est illustré dans le cas des ensembles S_{1,t} et S_{2,t} précédemment introduits. Avant la modification de la fonction 40, l'ensemble S_{1,t} contient un exemplaire de la ligne L_{i,j} qui comporte le mot recherché. L'ensemble S_{2,t} ne comporte pas d'exemplaire de cette ligne L_{1,j}. Après la modification de la fonction 40, la recherche du mot correspondant à l'adresse @r dans l'ensemble S_{2,t} provoque un défaut de cache. Classiquement, en réponse à ce défaut de cache, une ligne L_{2,j} contenant le mot recherché est transférée de la mémoire principale 8 vers la mémoire cache 6 et enregistrée dans l'ensemble S_{2,t}. Dès lors, à partir de ce moment-là, la mémoire cache 6 comporte deux exemplaires du même mot, l'un étant contenu dans la ligne L_{i,j} et l'autre étant contenu dans la ligne L_{2,j} On suppose aussi qu'après la modification de la fonction 40, le mot correspondant à l'adresse @r est modifié. Cette modification est alors uniquement enregistrée dans la ligne L_{2,j} de sorte que la L_{i,j} est maintenant obsolète. Supposons maintenant qu'après plusieurs modifications ultérieures de la fonction 40, la fonction 40 associe de nouveau l'adresse @_{Si,r} aux lignes de l'ensemble S_{1,t}. À ce moment-là, en réponse à une requête en lecture du mot situé à l'adresse @r, la mémoire cache 6 retournera la valeur obsolète de ce mot contenu dans la ligne L_{1,j}.

Comme cela sera compris à la lecture de la suite de la description, l'utilisation de la file 42 permet de minimiser le premier effet secondaire tandis que l'utilisation du compteur 50 et des compteurs Cᵢ,ⱼ permet de minimiser le second effet secondaire.

Également en parallèle des étapes 80, 82, 84 et 86, le procédé comporte une étape 89 de réinitialisation de la mémoire cache 6. L'étape 89 est déclenchée à chaque fois que l'automate 60 reçoit le signal de dépassement, c'est-à-dire à chaque fois que le compteur 50 atteint la limite Lmax₅₀. Lors de l'étape 89, le compteur 50 est réinitialisé à sa valeur nulle. De plus, l'automate 60 marque l'ensemble des lignes de la mémoire cache 6 comme étant invalides. En effet, suite à la réinitialisation de la valeur du compteur 50, les valeurs des compteurs C_{i,j} ne permettent plus de distinguer sûrement une ligne obsolète d'une ligne non-obsolète. Le marquage de chaque ligne comme étant invalide provoque un nouveau chargement de toutes les lignes de la mémoire cache à partir de la mémoire principale 8 et, à cette occasion, la mise à jour des valeurs des compteurs C_{i,j} associés à chacune des lignes.

L'exécution de l'étape 80 est typiquement déclenchée en cas de défaut de cache, c'est-à-dire dans le cas où le mot dont l'adresse @r est spécifiée dans la requête en lecture ou en écriture n'a pas pu être trouvé dans la mémoire cache 6.

Dans ce cas, lors d'une opération 90, l'automate 60 déclenche le chargement dans la mémoire cache 6, à partir de la mémoire principale 8, d'un ensemble de W lignes dont l'une d'elle contient le mot recherché. Classiquement, cet ensemble de W lignes est un ensemble de W lignes immédiatement contiguës les unes à côté des autres dans la mémoire principale 8. Cette opération de transfert de W lignes de la mémoire principale 8 vers la mémoire cache 6 est réalisée de façon classique et n'est donc pas décrite plus en détail.

Lors d'une opération 92, l'unité 14 enregistre les W lignes transférées depuis la mémoire principale 8 à la place des W lignes de l'ensemble S_{i,t} situé à l'adresse @_{Si,t}. L'adresse @_{Si,t} est l'adresse transformée obtenue à partir de l'adresse @_{Si,r} contenue dans la requête en lecture ou en écriture qui a déclenché ce défaut de cache. L'adresse @_{Si,t} est obtenue à l'aide de la fonction 40 paramétrée avec la valeur la plus récente du paramètre q.

Lors d'une opération 94, à chaque fois qu'une nouvelle ligne L_{i,j} est enregistrée dans la mémoire cache 6, la valeur du compteur C_{i,j} associée à cette ligne est prise égale à la valeur actuelle du compteur 50.

Enfin, lors d'une opération 96, le mot identifié par la requête reçue est lu ou écrit.

L'étape 82 débute par la réception, lors d'une opération 100, d'une requête en lecture d'un mot. Cette requête est émise par le microprocesseur 4. Cette requête en lecture contient notamment l'adresse @r du mot à lire et donc l'étiquette Tᵣ, l'adresse @_{Si,r} et l'indice dᵣ.

Lors d'une opération 102, l'étiquette Tᵣ, l'adresse @_{Si,r} et l'indice dᵣ sont enregistrés dans les registres, respectivement, Tᵣ, @_{Si,r} et dᵣ de l'unité 14 de gestion.

Lors d'une opération 104, la fonction 40 transforme alors l'adresse @_{Si,r} en une adresse @_{Si,t}. Lors de l'exécution de l'opération 104, c'est la valeur du paramètre q actuellement sélectionnée dans la file 42 qui est utilisée pour paramétrer la fonction 40. L'adresse @_{Si,t} dépend donc à la fois de l'adresse @_{Si,r} reçue et de la valeur actuellement sélectionnée du paramètre q. Lors de la première exécution de l'opération 104, c'est la valeur la plus récente du paramètre q qui est sélectionnée.

Ensuite, lors d'une opération 106, l'unité 14 sélectionne dans le support 7, l'ensemble S_{i,t} de W lignes L_{i,j} situé à l'adresse @_{Si,t}.

Lors d'une opération 108, le comparateur 56 traite les unes après les autres les W lignes sélectionnées. Pour chacune des lignes L_{i,j} ainsi sélectionnées, le comparateur 56 compare l'étiquette T_{i,j} de cette ligne à l'étiquette Tᵣ reçue et génère le signal de sélection de cette ligne uniquement si les étiquettes T_{i,j} et Tᵣ sont identiques.

En parallèle, lors d'une opération 110, pour la même ligne que celle actuellement traitée par le comparateur 56, le comparateur 52 compare la valeur du compteur C_{i,j} de cette ligne à la valeur actuelle du compteur 50. Seulement en cas de concordance entre la valeur du compteur C_{i,j} et du compteur 50, le comparateur 52 génère le signal de concordance.

Également en parallèle, lors d'une opération 112, l'extracteur 62 extrait, dans le champ D_{i,j} de la ligne actuellement traitée par le comparateur 56, le mot situé à la position repérée par l'indice dᵣ reçu.

Lors d'une opération 114, le circuit 52 transmet un signal de succès (« hit ») à l'automate 60 uniquement si, pour la même ligne L_{i,j}, le signal de sélection et le signal de concordance ont été générés, respectivement, par les comparateurs 56 et 52. Dans tous les autres cas, le circuit 54 transmet un signal de défaut de cache à l'automate 60.

En réponse à un signal de succès, lors d'une opération 116, l'automate 60 transmet au microprocesseur 4 le mot extrait lors de l'opération 112 et le procédé retourne à l'opération 100 pour traiter la prochaine requête en lecture.

Si le circuit 54 a généré un signal de défaut de cache, le procédé se poursuit par une opération 118. Lors de l'opération 118, l'automate 60 sélectionne dans la file 42 la valeur précédente du paramètre q qui y a été mémorisée, puis retourne à l'opération 104. Les opérations 104 à 114 sont alors une nouvelle fois exécutées mais cette fois-ci en utilisant la précédente valeur du paramètre q. Si le mot recherché est trouvé dans la mémoire cache 6 en utilisant cette précédente valeur du paramètre q, alors l'opération 116 est exécutée, ce qui arrête la réitération des opérations 104 à 114.

Dans le cas où le mot recherché est trouvé dans la mémoire cache en utilisant une valeur précédente du paramètre q, l'opération 116 est toutefois précédée d'une opération 120. Lors de l'opération 120, l'automate 60 remplace les W lignes L_{i,j} de l'ensemble S_{i,t} situé à l'adresse @_{Si,t} obtenue en utilisant la valeur la plus récente du paramètre q par les W lignes L_{i,j} sélectionnées en utilisant la valeur précédente du paramètre q qui a permis de trouver le mot recherché. Ainsi, si le même mot doit à nouveau être lu avant la prochaine modification de la fonction 40, l'accès à ce mot sera plus rapide car pour cela, il suffit d'utiliser la valeur la plus récente du paramètre q.

Lors de l'opération 120, typiquement, les W lignes L_{i,j} situées à l'adresse @_{Si,t} obtenue en utilisant la précédente valeur du paramètre q sont ensuite marquées comme étant invalides.

À l'inverse, si le mot recherché n'est pas trouvé dans la mémoire cache 6 en utilisant cette précédente valeur du paramètre q, alors l'opération 118 est une nouvelle fois exécutée. Il existe alors deux cas :
- Premier cas : Il existe dans la file 42 une valeur du paramètre q qui n'a pas encore été utilisée pour exécuter les opérations 104 à 114. Dans ce cas, ces opérations 104 à 114 sont une nouvelle fois exécutées avec cette nouvelle valeur précédente du paramètre q.
- Deuxième cas : Il n'existe plus, dans la file 42, une valeur précédente du paramètre q qui n'a pas encore été utilisée pour exécuter les opérations 104 à 114. Dans ce cas, l'automate 60 déclenche l'exécution de l'étape 80.

L'étape 84 débute par une opération 130 de réception par la mémoire cache 6 d'une requête en écriture d'un mot. Cette requête en écriture, comme une requête en lecture, comporte l'adresse @r du mot à écrire et donc l'étiquette Tᵣ, l'adresse @_{Si,r} et l'indice dᵣ. Cette requête en écriture comporte en plus la valeur Vᵣ à écrire. L'étape 84 comporte alors successivement les opérations 132, 134, 136, 138 et 140.

L'opération 132 est identique à l'opération 102 sauf que la valeur Vᵣ reçue est en plus enregistrée dans le registre Vᵣ.

Les opérations 134 et 136 sont identiques, respectivement, aux opérations 104 et 106.

Lors de l'opération 138, le comparateur 56 traite les unes après les autres les W lignes L_{i,j} sélectionnées. Cette opération est identique à l'opération 108. Dans le cas du traitement d'une requête en écriture, les opérations similaires aux opérations 112 et 114 n'ont pas besoin d'être exécutées ou, si elles sont exécutées, leur résultat peut être ignoré. Ainsi, dans le cas du traitement d'une requête en écriture, le signal de sélection et, en alternance, le signal d'absence de sélection sont systématiquement transformés par le circuit 54 en, respectivement, un signal de succès et un défaut de cache avant d'être transmis à l'automate 60.

Lors d'une opération 140, si un signal de succès est reçu par l'automate 60, en réponse, celui-ci déclenche l'écriture de la valeur Vᵣ dans le mot de la ligne L_{i,j} qui a déclenché l'émission de ce signal de succès.

À l'inverse, si l'automate 60 a reçu un signal de défaut de cache pour chacune des W lignes L_{i,j} sélectionnées, l'automate 60 exécute une opération 142. L'opération 142 est, par exemple, identique à l'opération 118 sauf que le procédé retourne à l'opération 134 et non pas à l'opération 104. Ainsi, le mot à écrire est également recherché en utilisant les précédentes valeurs du paramètre q afin de limiter le nombre de fois où l'étape 80 est exécutée. De plus, dans le cas où le mot recherché est trouvé en utilisant une précédente valeur du paramètre q, l'opération 140 est précédée d'une opération 142 identique à l'opération 120.

La figure 4 représente schématiquement l'architecture d'une mémoire cache 200 susceptible d'être utilisée à la place de la mémoire cache 6 dans le calculateur 2. La mémoire cache 200 est similaire à la mémoire cache 6 sauf qu'elle est modifiée pour :
- utiliser des adressages différents pour chaque processus différents exécutés en parallèle par le microprocesseur 4, et
- embrouiller les mots enregistrés dans la mémoire cache 200.

Dans ce mode de réalisation, les requêtes en écriture et en lecture reçues par la mémoire cache 200 comportent en plus un identifiant Idᵤ du processus exécuté par le microprocesseur 4 qui a émis cette requête.

La mémoire cache 200 est par exemple identique à la mémoire cache 6 sauf que l'unité 14 de gestion est remplacée par une unité 202 de gestion.

L'unité 202 est identique à l'unité 14 sauf que :
- elle comporte un registre supplémentaire Idᵤ destiné à contenir l'identifiant Idᵤ du processus qui a émis la requête en lecture ou en écriture,
- le générateur 44 est remplacé par un générateur 204,
- la file 42 est remplacée par un jeu 206 de files 42ᵤ, et
- l'unité 202 comporte en plus un embrouilleur 208 et un désembrouilleur 210.

Le générateur 204 est identique au générateur 44 sauf qu'il tire de façon aléatoire ou pseudo-aléatoire une nouvelle valeur du paramètre q pour chaque processus différents en cours d'exécution. Ainsi, lorsque le compteur 46 atteint la limite Lmax₄₆, au lieu de générer une seule nouvelle valeur du paramètre q, il génère autant de nouvelles valeurs du paramètre q qu'il y a de processus différents en cours d'exécution. Ainsi, chaque processus dispose de sa propre nouvelle valeur du paramètre q. Par la suite, le paramètre q associé à un processus particulier est noté qᵤ, où l'indice u est un identifiant du processus exécuté par le microprocesseur 4.

Pour chaque paramètre qᵤ, le générateur 204 génère aussi, en même temps que la nouvelle valeur de ce paramètre qᵤ, une nouvelle valeur pour une clé kᵤ d'embrouillage. Chaque clé kᵤ est associée au paramètre qᵤ ayant le même indice u. Typiquement, la nouvelle valeur de la clé kᵤ est tirée de façon aléatoire ou pseudo-aléatoire. Ici, la taille de chaque clé kᵤ est égale à la taille d'un mot. Ainsi, la nouvelle valeur d'un clé kᵤ est tirée de façon aléatoire ou pseudo-aléatoire dans l'ensemble E_{q}.

Le jeu 206 comporte autant de files 42ᵤ que de processus différents en cours d'exécution. Chaque file 42ᵤ est associée à un seul processus. L'indice u dans la référence numérique 42ᵤ est l'identifiant du processus associé à cette file 42ᵤ.

Chaque file 42ᵤ est ici identique à la file 42 et fonctionne comme la file 42 sauf que, en plus, pour chaque valeur du paramètre qᵤ, elle mémorise la valeur de la clé kᵤ associée à cette valeur du paramètre qᵤ. Ainsi, chaque valeur de la clé kᵤ est enregistrée dans la file 42ᵤ associée à la valeur du paramètre qᵤ qui a été générée en même temps que cette valeur de la clé kᵤ.

L'embrouilleur 208 embrouille chaque mot enregistré sur le support 7 à l'aide de la valeur la plus récente de la clé kᵤ. Ici, les termes « embrouiller » et « chiffrer » sont considérés comme des synonymes. Dans ce mode de réalisation, l'embrouillage d'un mot est réalisé, par exemple, à l'aide de la relation suivante : W_{i,j,d}* = W_{i,j,d} XOR kᵤ, où W_{ij,d} et W_{i,j,d}* sont respectivement le mot à embrouiller et le cryptogramme du mot embrouillé.

L'embrouilleur 208 est raccordé au jeu 206 pour obtenir la valeur de la clé kᵤ à utiliser pour l'embrouillage.

Le désembrouilleur 210 désembrouille le mot extrait de la mémoire cache 200 avant de le transmettre au microprocesseur. Ici, les termes « désembrouiller » et « déchiffrer » sont considérés comme des synonymes. À cet effet, le désembrouilleur 210 est raccordé à la sortie de l'extracteur 62 pour recevoir le cryptogramme W_{i,j,d}* et au jeu 206 pour recevoir la valeur de la clé kᵤ à utiliser pour le désembrouillage. Le désembrouilleur 210 transmet le mot désembrouillé à l'automate 60.

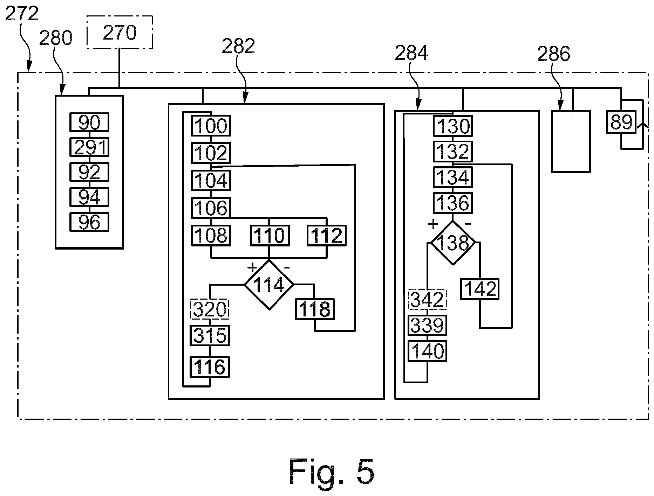

Le fonctionnement de l'unité 202 va maintenant être décrit à l'aide du procédé de la figure 5.

Le procédé comporte une phase 270 d'initialisation identique à la phase 70 sauf qu'une valeur initiale est enregistrée pour chaque paramètre qᵤ. De même, lors de cette phase d'initialisation, des valeurs initiales des clés kᵤ sont également générées et enregistrées dans les files 42ᵤ. Si le nombre de processus exécutés en parallèle n'est pas connu à l'avance, la phase 270 peut être exécutée à chaque fois que l'exécution d'un nouveau processus par le microprocesseur 4 débute.

Ensuite, lors d'une phase 272, plusieurs processus sont exécutés en parallèle par le microprocesseur 4. Ici, chacun de ces processus est associé à son propre identifiant Idᵤ. L'identifiant Idᵤ du processus est indiqué dans chaque requête en lecture ou en écriture. La phase 272 est par exemple identique à la phase 72 sauf que les étapes 80, 82, 84 et 86 sont remplacées, respectivement, par des étapes 280, 282, 284 et 286.

L'étape 280 est identique à l'étape 80 sauf qu'elle comporte en plus entre les opérations 90 de chargement des lignes depuis la mémoire principale 8 et l'opération 92 d'enregistrement de ces lignes sur le support 7, une opération 291 d'embrouillage de chaque mot des lignes chargées. L'embrouillage des mots chargés est réalisé par l'embrouilleur 208 en utilisant la valeur la plus récente de la clé kᵤ associée au processus qui a émis la requête qui a déclenché le défaut de cache.

Lors de l'opération 92, les lignes L_{i,j} enregistrées comportent donc les cryptogrammes des mots et non pas les mots en clair, c'est-à-dire les mots non-embrouillés.

L'étape 282 est identique à l'étape 82 sauf que :
- la requête en lecture reçue comporte l'identifiant Idᵤ du processus ayant émis cette requête,
- lors des opérations 104 à 114, c'est la valeur la plus récente et les valeurs précédentes du paramètre qᵤ enregistrées dans la file 42ᵤ associée à l'identifiant Idᵤ reçu qui sont utilisées comme cela a déjà été décrit lors de l'étape 80 dans le cas du paramètre q,
- l'opération 116 est précédée d'une opération 315 de désembrouillage des mots extraits par l'extracteur 62, et
- l'opération 120 est remplacée par une opération 320.

Lors de l'opération 315, le désembrouilleur 210 utilise la valeur la plus récente de la clé kᵤ qui est associée à l'identifiant Idᵤ reçu. Le désembrouilleur 210 transmet ensuite le mot désembrouillé à l'automate 60.

L'opération 320 est identique à l'opération 120 sauf que, avant de déplacer les lignes, les cryptogrammes contenus dans ces lignes sont désembrouillés par le désembrouilleur 210 en utilisant pour cela la valeur de la clé kᵤ associée à la valeur du paramètre qᵤ qui a permis de trouver le mot recherché dans la mémoire cache 200. Ensuite, chacun des mots en clair obtenus est embrouillé à nouveau, par l'embrouilleur 208, en utilisant pour cela la valeur la plus récente de la clé kᵤ. Ainsi, les mots des lignes déplacées dans l'ensemble S_{i,t} correspondant à l'adresse @_{Si,t} obtenue avec la valeur la plus récente du paramètre qᵤ sont embrouillés avec la valeur de la clé kᵤ associée à cette valeur la plus récente du paramètre qᵤ.

L'étape 284 est identique à l'étape 84 sauf que :
- la requête en écriture reçue comporte l'identifiant Idᵤ du processus ayant émis cette requête,
- lors des opérations 134 à 138, c'est la valeur la plus récente et les valeurs précédentes du paramètre qᵤ enregistrées dans la file 42ᵤ associée à l'identifiant Idᵤ reçu qui sont utilisées comme cela a déjà été décrit lors de l'étape 84 dans le cas du paramètre q,
- l'opération 140 est précédée d'une opération 339 d'embrouillage du mot à écrire, et
- l'opération 142 est remplacée par une opération 342.

Lors de l'opération 339, la valeur Vᵣ reçue est embrouillée par l'embrouilleur 208 en utilisant la valeur la plus récente de la clé kᵤ. Ensuite, lors de l'opération 140, c'est le cryptogramme ainsi obtenu qui est enregistré dans la ligne L_{i,j}.

L'opération 342 est, par exemple, identique à l'opération 315.

L'étape 286 est identique à l'étape 86 sauf que c'est le générateur 204 et les files 42ᵤ qui sont utilisés à la place, respectivement, du générateur 44 et de la file 42. Ainsi, l'exécution de l'étape 286 permet de modifier de façon répétée la fonction 40 et cela pour tous les processus exécutés.

On notera que dans ce mode de réalisation, l'adressage de la mémoire cache 200 est différent pour chacun des processus exécutés car chacun de ces processus est associé à sa propre valeur du paramètre qᵤ. Cela contribue à améliorer la robustesse de la mémoire cache 200 vis-à-vis des attaques par canaux auxiliaires. En particulier, un processus exécuté par le microprocesseur 4 peut très difficilement obtenir des informations sur l'adressage de la mémoire cache utilisé par un autre processus.

### Chapitre II - Variantes

Toutes les variantes décrites dans le contexte de l'unité 14, peuvent être transposées et appliquées à l'unité 200 et vice-versa. Ainsi, par la suite, les différentes variantes sont principalement décrites seulement dans le contexte de l'unité 14 de gestion.

### Variantes concernant le paramètre q :

En variante, l'ensemble E_{q} comporte uniquement 2^{p} valeurs différentes, où l'exposant p est un nombre entier strictement inférieur à n. Dans ce cas, la fonction 40 doit être adaptée pour tenir compte du fait que le paramètre q est codé sur p bits et non pas sur n bits. Par exemple, une première solution consiste à combiner seulement p bits de l'adresse @_{Si,r} avec le paramètre q. Une autre solution consiste à générer un mot de n bits à partir du paramètre q codé sur p bits puis à combiner ce mot de n bits avec l'adresse @_{Si,r} pour obtenir l'adresse @_{Si,t}. Dans une autre variante, le nombre p est supérieur au nombre n.

D'autres méthodes de sélection des précédentes valeurs du paramètre q sont possibles. En particulier, les différentes valeurs du paramètre q enregistrées dans la file 42 ne sont pas nécessairement sélectionnées dans l'ordre en partant de la valeur la plus récente vers la valeur la plus ancienne. Par exemple, dans un mode de réalisation alternatif, à chaque fois qu'une valeur précédente du paramètre q doit être sélectionnée, celle-ci est sélectionnée par tirage aléatoire parmi les R valeurs précédentes enregistrées dans la file 42. Si après un nombre Rmax prédéterminé de tirages aléatoires, le mot recherché n'a pas été trouvé, alors un défaut de cache est déclenché. Dans un autre mode de réalisation possible, toutes les valeurs du paramètre q sont systématiquement sélectionnées les unes après les autres. Dès lors, même après avoir sélectionné une valeur du paramètre q qui permet de trouver dans la mémoire cache 6 le mot recherché, le procédé ne s'arrête pas et les valeurs suivantes du paramètre q sont quand même sélectionnées les unes après les autres. Ainsi, le temps de recherche d'un mot dans la mémoire cache est systématiquement constant. Grâce à cela, il n'est pas possible d'obtenir une information sur la position de la précédente valeur du paramètre q utilisée pour trouver le mot recherché. Ce mode de réalisation est donc plus robuste vis-à-vis des attaques par canaux auxiliaires.

Dans un autre mode de réalisation, la nouvelle valeur du paramètre q n'est pas construite par le générateur 44 mais directement par le microprocesseur 4 lui-même. Dans ce cas, à chaque fois que le microprocesseur 4 souhaite lire ou écrire un mot dans la mémoire cache 6, la requête transmise à cette mémoire cache comporte en plus la valeur la plus récente du paramètre q à utiliser pour lire ou écrire un mot. Dans ce cas, de préférence, lorsque plusieurs processus sont exécutés simultanément par le calculateur 2, chacun de ces processus transmet à la mémoire cache une valeur du paramètre q qui lui est propre et personnel.

Le déclenchement de la génération d'une nouvelle valeur du paramètre q peut être réalisé différemment. Par exemple, dans un autre mode de réalisation, le générateur 44 comporte une minuterie qui décompte une durée T44. À chaque fois que la durée T44 s'est écoulée, le générateur 44 génère une nouvelle valeur du paramètre q puis recommence à décompter la durée T44. Ainsi, dans ce cas, l'intervalle de renouvellement de la valeur du paramètre q est indépendant du nombre d'accès à la mémoire cache 6. Dans un autre mode de réalisation, c'est un autre événement qu'un accès à la mémoire cache 6 qui est compté et qui déclenche la génération d'une nouvelle valeur du paramètre q lorsque la limite Lmax₄₆ est atteinte. Par exemple, au lieu de compter les accès à la mémoire cache 6, le générateur 44 peut compter le nombre de défaut de cache ou le nombre de « hit » ou tout autre événement mesurable par la mémoire cache 6. La génération d'une nouvelle valeur du paramètre q peut aussi être déclenchée à chaque fois qu'un nouveau processus est exécuté par le calculateur 2 ou à chaque changement de contexte. Par "changement de contexte", on désigne le fait que le microprocesseur 4 arrête d'exécuter les instructions d'un premier processus pour reprendre ou débuter l'exécution d'un second processus. Dans ce cas, les intervalles de renouvellement des valeurs du paramètre q ne sont pas nécessairement réguliers. Enfin, dans un autre exemple de mode de réalisation, la génération d'une nouvelle valeur du paramètre q est déclenchée en réponse à la réception d'une commande particulière émise par le microprocesseur 4.

Il existe d'autres méthodes qu'un tirage aléatoire ou pseudo-aléatoire pour générer une nouvelle valeur du paramètre q. Par exemple, les valeurs de l'ensemble E_{q} sont classées dans un ordre prédéterminé depuis une première valeur jusqu'à une dernière valeur. La nouvelle valeur du paramètre q est prise égale à la valeur qui suit immédiatement la précédente valeur de ce paramètre dans l'ordre prédéterminé. Lorsque la valeur précédente du paramètre q est égale à la dernière valeur de l'ensemble E_{q}, la nouvelle valeur du paramètre q est prise égale à la première valeur de cet ensemble E_{q}. Ainsi, la valeur du paramètre q varie de façon cyclique. Dans une autre variante, la nouvelle valeur du paramètre q est construite à partir de sa précédente valeur. Par exemple, la nouvelle valeur est construite à l'aide de la relation suivante : q_{new} = q_{old}.kₑ mod p, où :
- q_{new} et q_{old} sont, respectivement, la nouvelle et l'ancienne valeurs du paramètre q,
- kₑ est un nombre entier constant codé sur p bits, et
- q_{old}.kₑ mod p est l'opération de multiplication modulaire de la valeur q_{old} par le nombre kₑ modulo p.

Pour générer une nouvelle valeur du paramètre q, il est aussi possible de prendre en compte des données reçues ou générées par la mémoire cache. Par exemple, lorsque la limite Lmax₄₆ est atteinte, la nouvelle valeur du paramètre q est construite à partir de la valeur de la dernière étiquette Tᵣ reçue. Une solution pour faire cela est d'utiliser la relation suivante : q = Tᵣ mod n.

Dans un autre mode de réalisation, l'unité 14 est modifiée pour permuter en plus les valeurs de l'indice dᵣ reçues de manière à obtenir un indice d_{r,t} transformé. Ensuite, c'est cet indice d_{r,t} qui et utilisé pour sélectionner le mot à lire ou à écrire. Autrement dit, ce qui a été décrit pour transformer l'adresse @_{Si,r} reçue peut aussi être appliqué en plus à l'indice dᵣ. L'homme du métier peut transposer sans difficulté l'enseignement donné ici dans le cas de l'adresse @_{Si,r} à l'indice dᵣ pour obtenir un tel mode de réalisation.

### Autres variantes :

Dans un mode de réalisation simplifié, le compteur 50 et les compteurs Cᵢ,ⱼ associés à chacune des lignes sont omis. Ceci est acceptable notamment si la probabilité qu'une ligne obsolète soit utilisée et négligeable.

Dans un autre mode de réalisation simplifié, la file 42 comporte un seul registre contenant seulement la valeur la plus récente du paramètre q. Dans ce cas, la réitération des opérations 104 à 114 est omise. Par contre, le nombre de défauts de cache est alors plus important, ce qui ralentit l'exécution des processus. Toutefois, dans certains contextes, un tel ralentissement au profit d'une augmentation de la robustesse vis-à-vis des attaques par canaux auxiliaires est acceptable.

En variante, le nombre M est supérieur au nombre R ou strictement inférieur au nombre R. Dans un cas particulier, le nombre M peut être choisi égal à zéro.

Le nombre d'accès à la mémoire cache entre deux modifications successives de la fonction 40 peut être supérieur à 1 000. Par exemple, en variante, ce nombre est supérieur à 5 000 ou 10 000. Ce nombre peut aussi être inférieur à 100 dans certains cas particuliers nécessitants un très haut niveau de sécurité.

L'embrouillage et le désembrouillage des mots enregistrés dans la mémoire cache 200 peut être mis en œuvre avec la mémoire cache 6. Dans ce cas, la clé k₆ utilisée pour embrouiller et désembrouiller les mots peut être commune à tous les processus exécutés en parallèle. Le générateur 44 est adapté pour générer une nouvelle valeur de la clé k₆ à chaque fois qu'il génère une nouvelle valeur du paramètre q. De préférence, dans ce cas, des nouvelles valeurs du paramètre q et de la clé k₆ sont générées à chaque changement de contexte. Des embrouilleur et désembrouilleur similaires, respectivement, à l'embrouilleur 208 et au désembrouilleur 210 sont aussi implémentés dans l'unité 14 de gestion de la mémoire cache. Le fonctionnement de l'embrouilleur et du désembrouilleur dans le contexte de la mémoire cache 6 se déduit des explications données en référence aux figures 4 et 5.

La mémoire cache peut être divisée en différents niveaux de mémoire cache traditionnellement appelés « cache L1 », « cache L2 », « cache L3 »,... etc. Les temps d'accès à ces différents niveaux augmentent en allant de la cache L1 vers la cache L3. De plus, ces différents niveaux de mémoire cache ne sont pas nécessairement implantés sur une même puce (« die » en anglais). Par exemple, le la cache L1 peut être implémentée à l'intérieur du microprocesseur 4 tandis que les niveaux supérieurs sont implémentés à l'extérieur du microprocesseur 4. Les procédés de gestion d'une mémoire cache décrits ici sont applicables à chacun de ces niveaux de mémoire cache. De préférence, les procédés décrits ici sont appliqués à chacun de ces niveaux.

Ce qui a été décrit ici s'applique en particulier aux mémoires caches qui ne sont utilisées que par un seul processus en même temps. De telles mémoires caches ne sont pas utilisées pour partager des données entre différents processus simultanément exécutés.

La mémoire de masse peut être située à l'extérieur du calculateur et raccordée à ce calculateur par un bus ou un réseau de transmission d'informations. De même, la mémoire principale peut elle aussi être mécaniquement située à l'extérieur du calculateur et raccordée à ce calculateur par un bus ou un réseau de transmission d'informations.

Ce qui a été décrit ici s'applique à d'autres longueurs de mot et de lignes.

On notera aussi que l'enseignement donné ici s'applique aussi aux cas des mémoires caches à correspondance directe (« direct mapped » en anglais). Dans ce cas, le nombre W est égal à un et l'adresse @_{Si,r} correspond à une seule ligne de la mémoire cache.

L'étiquette Tᵣ peut être construite aussi bien à partir de l'adresse @rᵣ physique du mot recherché que de l'adresse @rᵥ virtuelle de ce mot recherché. En effet, il est toujours possible de convertir une adresse physique en une adresse virtuelle et vice-versa. C'est typiquement la fonction d'une unité de gestion de mémoire connue sous l'acronyme MMU (« Memory Management Unit »).

Dans un autre mode de réalisation, l'indice dᵣ est omis dans la requête de lecture d'un mot dans la mémoire cache. Dans ce cas, en cas de correspondance entre l'étiquette Tᵣ et l'une des étiquettes T_{i,j}, la mémoire cache 6 envoie au microprocesseur 4 le champ D_{i,j} complet. C'est ensuite le microprocesseur 4 qui procède lui-même à l'extraction du mot souhaité dans le champ D_{i,j} reçu.

Au lieu de comporter un seul microprocesseur, le calculateur électronique peut comporter plusieurs microprocesseurs chacun capable d'accéder à la mémoire cache 6. Dans ce cas, chaque processus exécuté en parallèle des autres est, par exemple, exécuté par son propre microprocesseur. Ce qui a été décrit ici dans le cas particulier où les différents processus sont exécutés, en parallèle, par le même microprocesseur 4 fonctionne de la même façon dans le cas d'un tel calculateur électronique équipé de plusieurs microprocesseurs.

### Variantes du procédé :

Dans une variante possible du procédé, la ligne trouvée dans la mémoire cache en utilisant une précédente valeur du paramètre q n'est pas déplacée dans l'ensemble situé à l'adresse @_{Si,t} obtenue avec la valeur la plus récente du paramètre q. Autrement dit, l'opération 120 est omise.

L'ordre des opérations du procédé de gestion des figures 3 et 5 peut être modifié. Par exemple, dans une variante, l'opération 110 est exécutée uniquement si lors de l'opération 108 une correspondance a été trouvée entre l'étiquette Tᵣ et l'une des étiquettes T_{i,j}. Il est aussi possible de faire l'inverse, c'est-à-dire que l'opération 108 est exécutée uniquement si lors de l'opération 110 la valeur du compteur Cᵢ,ⱼ concorde avec la valeur actuelle du compteur 50.

### Chapitre III - Avantages des modes de réalisation décrits

Le fait d'utiliser des fonctions de transformation qui permutent simultanément au moins 50 % des adresses @_{Si,r} augmente la difficulté pour mettre en œuvre une attaque de cette mémoire cache par canaux auxiliaires. En effet, l'adressage de la mémoire cache avant et après la modification de la fonction 40 sont très différents. Il est alors très difficile d'obtenir des informations sur le fonctionnement d'un processus en observant ses accès à la mémoire cache ou en mesurant les temps d'accès à la mémoire cache lorsque la modification de l'adressage intervient au cours de l'exécution de ce processus. De plus, la modification de l'adressage concerne aussi bien le cas des « hit » que le cas des « miss ». Ainsi, par rapport au procédé décrit dans l'article de Zhenghong & Al, les procédés décrits ici augmentent de façon beaucoup plus importante la diversité des accès à la mémoire cache. Les procédés décrits ici sont donc plus robuste vis-à-vis des attaques par canaux auxiliaires

L'utilisation du compteur 50 et des compteurs de lignes Cᵢ,ⱼ permet de minorer le second effet secondaire sans pour autant ralentir de façon conséquente l'exécution des processus. On notera à ce sujet que pour lutter contre un tel effet secondaire, l'article de Zhenghong & Al enseigne de rendre invalide les lignes dont l'adressage a changé. Toutefois, cette méthode n'est pas transposable à la situation décrite ici où la majorité des adresses @_{Si,r} sont permutées en même temps. En effet, invalider les lignes de chacun des ensembles S_{i,r} dont les adresses ont été permutées reviendrait à évincer de la mémoire cache un très grand nombre de lignes à chaque fois que la fonction 40 est modifiée. Or, évincer un grand nombre de lignes de la mémoire cache vers une mémoire de rang supérieur ralentit de façon importante l'exécution des processus. De même, ce même article indique qu'une autre méthode, moins efficace, consiste à déplacer les lignes dans la mémoire cache pour éviter l'apparition de lignes obsolètes. Toutefois, cette autre méthode suggérée par l'article de Zhenghong & Al n'est pas non plus applicable à la présente situation où la majorité des adresses d'ensemble sont permutés en même temps. En effet, dans ce cas, il faudrait déplacer un très grand nombre de lignes dans la mémoire cache, ce qui ralentit également beaucoup l'exécution des processus.

L'utilisation des valeurs précédentes du paramètre q pour rechercher un mot dans la mémoire cache permet de limiter de façon substantielle le nombre de défauts de cache provoqués par une modification de la fonction 40. Cela minimise donc le premier effet secondaire décrit précédemment.

Le fait d'enregistrer une ligne trouvée dans la mémoire cache en utilisant une précédente valeur du paramètre q à l'emplacement correspondant à l'adresse @_{Si,t} obtenue en utilisant la valeur la plus récente du paramètre q permet de retrouver plus rapidement cette ligne si celle-ci est à nouveau lue ou écrite avant la prochaine modification de la fonction 40.

Le fait de tirer aléatoirement ou pseudo-aléatoirement la nouvelle valeur du paramètre q dans un ensemble de plus de 2⁸ valeurs différentes augmente la robustesse du calculateur 2 vis-à-vis des tentatives d'attaque par canaux auxiliaires.

L'utilisation de valeurs différentes du paramètre qᵤ pour chacun des processus exécutés en parallèle augmente également la robustesse du procédé vis-à-vis des attaques par canaux auxiliaires. En effet, dans ces conditions, il est très difficile pour un processus de déduire des informations sur le fonctionnement de l'adressage de la mémoire cache par un autre processus.

## Revendications

1. Procédé de gestion d'une mémoire cache d'un calculateur électronique, ce procédé comportant les étapes suivantes au cours de l'exécution par ce calculateur d'un processus qui doit traiter un mot :
a) la réception (100, 130) d'une requête contenant une adresse du mot à lire ou à écrire, cette adresse comprenant :
- une étiquette de lignes (Tᵣ),
- une adresse d'ensemble (@_{Si,r}), cette adresse d'ensemble appartenant à un premier ensemble de s valeurs différentes, où le nombre s est un nombre entier supérieur à deux,
b) la transformation (104, 134) de l'adresse d'ensemble reçue en une adresse d'ensemble transformée à l'aide d'une fonction de transformation bijective qui permute au moins deux valeurs du premier ensemble,
c) la sélection (106, 136) d'une ou plusieurs étiquettes de lignes enregistrées dans la mémoire cache à l'adresse d'ensemble transformée,
d) la comparaison (108, 138) de l'étiquette de lignes reçue à la ou aux étiquettes de lignes sélectionnées en fonction de l'adresse d'ensemble transformée, pour déterminer si l'une de ces étiquettes de lignes sélectionnées correspond à l'étiquette de lignes reçue,
e) lorsque aucune des étiquettes sélectionnées ne correspond à l'étiquette de lignes reçue, le déclenchement (118, 142) d'un défaut de cache et la fourniture du mot à partir d'une mémoire de rang supérieur, et lorsque, au contraire, l'une des étiquettes de lignes sélectionnées correspond à l'étiquette de lignes reçue, la lecture ou l'écriture dans la mémoire cache du mot à l'intérieur de la ligne associée à l'étiquette de lignes qui correspond à l'étiquette de lignes reçue,
f) la modification (86; 286) de la fonction de transformation, cette modification de la fonction de transformation étant répétée plusieurs fois au cours de l'exécution du processus de sorte que, au cours de la même exécution du processus, la fonction de transformation associe successivement dans le temps, à une même adresse d'ensemble susceptible d'être reçue, plusieurs adresses d'ensemble transformées différentes,
**caractérisé en ce que** :
- la fonction de transformation est paramétrée par un paramètre q de sorte que l'adresse d'ensemble transformée obtenue lors de l'étape f) dépend à la fois de l'adresse d'ensemble reçue et de la valeur de ce paramètre q, et pour toutes les valeurs non nulles du paramètre q, la fonction de transformation permute au moins 50 % des adresses d'ensemble, et
- lors de chaque exécution de l'étape f), une nouvelle valeur du paramètre q est générée pour modifier la fonction de transformation.

2. Procédé selon la revendication 1, dans lequel :
- un compteur de modifications est incrémenté (88) à chaque modification de la fonction de transformation,
- à chaque fois qu'une nouvelle ligne est enregistrée dans la mémoire cache, la valeur actuelle du compteur de modifications est enregistrée (94) dans un compteur de lignes associé uniquement à cette ligne,
- lorsque l'une des étiquettes de lignes sélectionnée correspond à l'étiquette de lignes reçue, alors le procédé comporte :
• la comparaison (110) de la valeur du compteur de ligne de la ligne comportant cette étiquette de ligne, à la valeur du compteur de modification,
• lorsque la valeur du compteur de lignes est inférieure à Cₘ-M, alors la lecture ou l'écriture du mot dans la mémoire cache est inhibée et un défaut de cache est déclenché (118, 142), et
• à l'inverse, lorsque la valeur du compteur de lignes est supérieure ou égale à Cₘ-M, alors le défaut de cache n'est pas déclenché et la lecture ou l'écriture du mot dans la mémoire cache est poursuivie (116, 140),
où :
- Cₘ est la valeur du compteur de modifications au moment où la valeur du compteur de lignes est comparée à la valeur du compteur de modification, et
- M est un nombre entier compris entre 1 et 50.

3. Procédé selon la revendication 2, dans lequel le procédé comporte :
- le marquage (89) de l'ensemble des lignes de la mémoire cache comme étant invalides en réponse au franchissement par le compteur de modifications d'un seuil prédéterminé, et
- l'inhibition de l'utilisation de chaque ligne marquée comme étant invalide jusqu'à son remplacement par une nouvelle ligne chargée à partir de la mémoire de rang supérieur.

4. Procédé selon l'une quelconque des revendications précédentes, dans lequel :
- à chaque modification de la fonction de transformation, la précédente valeur du paramètre q est enregistrée (88) dans une file contenant les R précédentes valeurs du paramètre q, où R est un nombre entier compris entre 1 et 50,
- lorsque aucune des étiquettes de lignes sélectionnées ne correspond à l'étiquette de lignes reçue et avant de déclencher un défaut de cache et avant de fournir le mot à partir de la mémoire de rang supérieur, l'une des précédentes valeurs du paramètre q est sélectionnée (118, 142) dans la file et les étapes b) à e) sont exécutées une nouvelle fois en utilisant la précédente valeur sélectionnée pour le paramètre q à la place de la valeur courante de ce paramètre q.

5. Procédé selon la revendication 4, dans lequel, lorsqu'une étiquette de lignes correspondant à l'étiquette de lignes reçue est trouvée dans la mémoire cache en utilisant l'une des précédentes valeurs du paramètre q, le procédé comporte le remplacement (120, 142; 320, 342) de l'une des lignes de l'ensemble situé à l'adresse d'ensembles transformée obtenue à partir de la valeur la plus récente du paramètre q, par la ligne associée à cette étiquette de lignes correspondant à l'étiquette de lignes reçue.

6. Procédé selon la revendication 4 ou 5, dans lequel le nombre R est compris entre 4 et 16.

7. Procédé selon les revendications 2 et 4 prises ensemble, dans lequel le nombre M est égal au nombre R.

8. Procédé selon l'une quelconque des revendications précédentes, dans lequel :
- un compteur d'accès à la mémoire cache est incrémenté (87) à chaque accès à la mémoire cache, et
- lorsque ce compteur d'accès à la mémoire cache atteint une limite prédéterminée, une nouvelle exécution de l'étape f) est automatiquement déclenchée et le compteur d'accès à la mémoire cache est réinitialisé, la limite prédéterminée étant égale à un nombre d'accès à la mémoire cache compris entre 100 et 1 000.

9. Procédé selon l'une quelconque des revendications précédentes, dans lequel chaque nouvelle valeur du paramètre q est générée (88) par tirage aléatoire ou pseudo-aléatoire de cette nouvelle valeur dans un ensemble de 2^{p} valeurs différentes possibles pour le paramètre q, où l'exposant p est un nombre entier supérieur ou égal à 4, 8 ou 16.

10. Procédé selon l'une quelconque des revendications précédentes, dans lequel le procédé comporte, au cours de l'exécution simultanée par le calculateur d'un premier et d'un second processus qui traitent, respectivement, un premier et un second mots :
- l'exécution de l'étape f) (286) pour, respectivement, les premier et second processus et ainsi obtenir une première valeur du paramètre q pour le premier processus et une seconde valeur du paramètre q pour le second processus, ces première et seconde valeurs du paramètre q étant enregistrées et associées respectivement, aux premier et second processus,
- lorsque le premier processus lit ou écrit le premier mot, l'exécution des étapes a) à e) en utilisant pour cela la première valeur du paramètre q,
- lorsque le second processus lit ou écrit le second mot, l'exécution des étapes a) à e) en utilisant pour cela la seconde valeur pour le paramètre q.

11. Procédé selon l'une quelconque des revendications précédentes, dans lequel le procédé comporte également :
- à chaque fois qu'une nouvelle valeur du paramètre q est générée, la génération (286) d'une nouvelle valeur d'une clé kᵤ, puis
- tant que la valeur du paramètre q n'est pas à nouveau modifiée, l'embrouillage (339) de chaque mot à écrire dans la mémoire cache à l'aide de cette nouvelle valeur de la clé kᵤ pour obtenir un cryptogramme de ce mot et l'enregistrement du cryptogramme dans la mémoire cache à la place du mot, et
- en réponse à la requête contenant l'adresse du mot à lire ou à écrire et si une ligne comportant une étiquette de lignes correspondant à l'étiquette de lignes reçue a pu être trouvée dans la mémoire cache, le désembrouillage (315) du cryptogramme de cette ligne à l'aide de la valeur de la clé kᵤ générée en même temps que la valeur du paramètre q utilisée pour obtenir l'adresse d'ensemble transformée qui a permis de sélectionner cette ligne.

12. Unité (14; 200) de gestion d'une mémoire cache d'un calculateur électronique, cette unité étant configurée pour réaliser les étapes suivantes au cours de l'exécution par ce calculateur d'un processus qui doit traiter un mot :
a) la réception d'une requête contenant une adresse du mot à lire ou à écrire, cette adresse comprenant :
- une étiquette de lignes (Tᵣ),
- une adresse d'ensemble (@_{Si,r}), cette adresse d'ensemble appartenant à un premier ensemble de s valeurs différentes, où le nombre s est un nombre entier supérieur à deux,
b) la transformation de l'adresse d'ensemble reçue en une adresse d'ensemble transformée à l'aide d'une fonction (40) de transformation bijective qui permute au moins deux valeurs du premier ensemble,
c) la sélection d'une ou plusieurs étiquettes de lignes enregistrées dans la mémoire cache à l'adresse d'ensemble transformée,
d) la comparaison de l'étiquette de lignes reçue à la ou aux étiquettes de lignes sélectionnées en fonction de l'adresse d'ensemble transformée, pour déterminer si l'une de ces étiquettes de lignes sélectionnées correspond à l'étiquette de lignes reçue,
e) lorsque aucune des étiquettes sélectionnées ne correspond à l'étiquette de lignes reçue, le déclenchement d'un défaut de cache et la fourniture du mot à partir d'une mémoire de rang supérieur, et lorsque, au contraire, l'une des étiquettes de lignes sélectionnées correspond à l'étiquette de lignes reçue, la lecture ou l'écriture dans la mémoire cache du mot à l'intérieur de la ligne associée à l'étiquette de lignes qui correspond à l'étiquette de lignes reçue,
f) la modification de la fonction de transformation, cette modification de la fonction de transformation étant répétée plusieurs fois au cours de l'exécution du processus de sorte que, au cours de la même exécution du processus, la fonction de transformation associe successivement dans le temps, à une même adresse d'ensemble susceptible d'être reçue, plusieurs adresses d'ensemble transformées différentes,
**caractérisé en ce que** :
- l'unité de gestion comporte une fonction (40) de transformation paramétrée par un paramètre q de sorte que l'adresse d'ensemble transformée obtenue lors de l'étape f) dépend à la fois de l'adresse d'ensemble reçue et de la valeur de ce paramètre q, et pour toutes les valeurs non nulles du paramètre q, la fonction de transformation permute au moins 50 % des adresses d'ensemble, et
- l'unité de gestion est configurée pour, lors de chaque exécution de l'étape f), générer une nouvelle valeur du paramètre q pour modifier la fonction de transformation.

## Patentansprüche

1. Verfahren zur Verwaltung eines Cache-Speichers eines elektronischen Rechners, wobei dieses Verfahren im Verlauf der Ausführung, durch diesen Rechner, eines Prozesses, der ein Wort verarbeiten soll, die folgenden Schritte aufweist:
a) das Empfangen (100, 130) einer Anforderung, die eine Adresse des zu lesenden oder zu schreibenden Worts enthält, diese Adresse umfassend:
- ein Zeilenetikett (Tᵣ),
- eine Mengenadresse (@_{Si,r}), wobei diese Mengenadresse zu einer ersten Menge von s verschiedenen Werten gehört, wobei die Zahl s eine Ganzzahl größer als zwei ist,
b) das Umwandeln (104, 134) der empfangenen Mengenadresse in eine umgewandelte Mengenadresse mithilfe einer bijektiven Umwandlungsfunktion, die mindestens zwei Werte der ersten Menge permutiert,
c) das Auswählen (106, 136) einer oder mehrerer Zeilenetiketten, die im Cache-Speicher an der umgewandelten Mengenadresse gespeichert sind,
d) das Vergleichen (108, 138) des empfangenen Zeilenetiketts mit dem oder den Zeilenetiketten, die in Abhängigkeit von der umgewandelten Mengenadresse ausgewählt sind, um zu bestimmen, ob eins dieser ausgewählten Zeilenetiketten dem empfangenen Zeilenetikett entspricht,
e) wenn keins der ausgewählten Etiketten dem empfangenen Zeilenetikett entspricht, das Auslösen (118, 142) eines Cache-Fehlers und das Bereitstellen des Worts aus einem höherrangigen Speicher, und wenn, im Gegenteil, eins der ausgewählten Zeilenetiketten dem empfangenen Zeilenetikett entspricht, das Lesen oder Schreiben des Worts in den Cache-Speicher innerhalb der Zeile, die dem Zeilenetikett zugeordnet ist, das dem empfangenen Zeilenetikett entspricht,
f) das Verändern (86; 286) der Umwandlungsfunktion, wobei dieses Verändern der Umwandlungsfunktion im Verlauf der Ausführung des Prozesses mehrmals wiederholt wird, so dass im Verlauf derselben Ausführung des Prozesses die Umwandlungsfunktion mit der Zeit einer selben Mengenadresse, die empfangen werden kann, nacheinander mehrere verschiedene umgewandelte Mengenadressen zuordnet,
**dadurch gekennzeichnet, dass**:
- die Umwandlungsfunktion durch einen Parameter q so parametriert ist, dass die umgewandelte Mengenadresse, die beim Schritt f) erhalten wird, zugleich von der empfangenen Mengenadresse und dem Wert dieses Parameters q abhängt, und für alle Werte ungleich null des Parameters q die Umwandlungsfunktion mindestens 50 % der Mengenadressen permutiert, und
- bei jeder Ausführung des Schritts f) ein neuer Wert des Parameters q erzeugt wird, um die Umwandlungsfunktion zu verändern.

2. Verfahren nach Anspruch 1, wobei:
- ein Veränderungszähler bei jeder Veränderung der Umwandlungsfunktion inkrementiert (88) wird,
- jedes Mal, wenn eine neue Zeile im Cache-Speicher gespeichert wird, der aktuelle Wert des Veränderungszählers in einem Zeilenzähler (94) gespeichert wird, der nur dieser Zeile zugeordnet ist,
- wenn eins der ausgewählten Zeilenetiketten dem empfangenen Zeilenetikett entspricht, das Verfahren Folgendes aufweist:
• das Vergleichen (110) des Werts des Zeilenzählers der Zeile, die dieses Zeilenetikett aufweist, mit dem Wert des Veränderungszählers,
• wenn der Wert des Zeilenzählers kleiner als Cₘ-M ist, das Lesen oder Schreiben des Worts in den Cache-Speicher gehemmt und ein Cache-Fehler ausgelöst (118, 142) wird, und
• umgekehrt, wenn der Wert des Zeilenzählers größer oder gleich Cₘ-M ist, der Cache-Fehler nicht ausgelöst wird, und das Lesen oder Schreiben des Worts in den Cache-Speicher fortgesetzt (116, 140) wird,
wobei:
- Cₘ der Wert des Veränderungszählers zum Zeitpunkt ist, zu dem der Wert des Zeilenzählers mit dem Wert des Veränderungszählers verglichen wird, und
- M eine Ganzzahl zwischen 1 und 50 ist.

3. Verfahren nach Anspruch 2, wobei das Verfahren Folgendes aufweist:
- das Markieren (89) der Menge der Zeilen des Cache-Speichers als ungültig in Reaktion auf das Überschreiten eines vorbestimmten Schwellenwerts durch den Veränderungszähler, und
- das Hemmen der Nutzung jeder als ungültig markierten Zeile bis zu ihrer Ersetzung durch eine neue Zeile, die aus dem höherrangigen Speicher geladen wird.

4. Verfahren nach einem der vorhergehenden Ansprüche, wobei:
- bei jeder Veränderung der Umwandlungsfunktion der vorhergehende Wert des Parameters q in einer Warteschlange gespeichert (88) wird, die die R vorhergehenden Werte des Parameters q enthält, wobei R eine Ganzzahl zwischen 1 und 50 ist,
- wenn keins der ausgewählten Zeilenetiketten dem empfangenen Zeilenetikett entspricht, und vor dem Auslösen eines Cache-Fehlers und vor dem Bereitstellen des Worts aus dem höherrangigen Speicher, einer der vorhergehenden Werte des Parameters q in der Warteschlange ausgewählt (118, 142) wird und die Schritte b) und e) erneut ausgeführt werden, wobei der vorhergehende ausgewählte Wert für den Parameter q anstelle des aktuellen Werts dieses Parameters q genutzt wird.

5. Verfahren nach Anspruch 4, wobei, wenn ein Zeilenetikett, das dem empfangenen Zeilenetikett entspricht, im Cache-Speicher gefunden wird, wobei einer der vorhergehenden Werte des Parameters q genutzt wird, das Verfahren das Ersetzen (120, 142; 320, 342) einer der Zeilen der Menge, die sich an der umgewandelten Mengenadresse befindet, die ausgehend von dem neuesten Wert des Parameters q erhalten wird, durch die Zeile, die diesem Zeilenetikett zugeordnet ist, das dem empfangenen Zeilenetikett entspricht, aufweist.

6. Verfahren nach Anspruch 4 oder 5, wobei die Zahl R zwischen 4 und 16 liegt.

7. Verfahren nach den Ansprüchen 2 und 4 zusammengenommen, wobei die Zahl M gleich der Zahl R ist.

8. Verfahren nach einem der vorhergehenden Ansprüche, wobei:
- ein Zähler von Zugriffen auf den Cache-Speicher bei jedem Zugriff auf den Cache-Speicher inkrementiert (87) wird, und
- wenn dieser Zähler von Zugriffen auf den Cache-Speicher eine vorbestimmte Grenze erreicht, eine neue Ausführung des Schritts f) automatisch ausgelöst wird und der Zähler von Zugriffen auf den Cache-Speicher zurückgesetzt wird, wobei die vorbestimmte Grenze gleich einer Anzahl von Zugriffen auf den Cache-Speicher zwischen 100 und 1000 ist.

9. Verfahren nach einem der vorhergehenden Ansprüche, wobei jeder neue Wert des Parameters q durch zufälliges oder pseudozufälliges Ziehen dieses neuen Werts aus einer Menge von 2^{P} möglichen verschiedenen Werten für den Parameter q erzeugt (88) wird, wobei der Exponent p eine Ganzzahl größer oder gleich 4, 8 oder 16 ist.

10. Verfahren nach einem der vorhergehenden Ansprüche, wobei das Verfahren im Verlauf der gleichzeitigen Ausführung, durch den Rechner, eines ersten und zweiten Prozesses, die jeweils ein erstes bzw. zweites Wort verarbeiten, Folgendes aufweist:
- das Ausführen des Schritts f) (286) für den ersten bzw. zweiten Prozess und um so einen ersten Wert des Parameters q für den ersten Prozess und einen zweiten Wert des Parameters q für den zweiten Prozess zu erhalten, wobei dieser erste bzw. zweite Wert des Parameters q gespeichert und dem ersten bzw. zweiten Prozess zugeordnet werden,
- wenn der erste Prozess das erste Wort liest oder schreibt, das Ausführen der Schritte a) bis e) unter Verwendung des ersten Werts des Parameters q dafür,
- wenn der zweite Prozess das zweite Wort liest oder schreibt, das Ausführen der Schritte a) bis e) unter Verwendung des zweiten Werts für den Parameter q dafür.

11. Verfahren nach einem der vorhergehenden Ansprüche, wobei das Verfahren ebenfalls Folgendes aufweist:
- jedes Mal, wenn ein neuer Wert des Parameters q erzeugt wird, das Erzeugen (286) eines neuen Werts eines Schlüssels kᵤ, dann
- solange der Wert des Parameters q nicht erneut verändert ist, das Verwürfeln (339) jedes Worts, das in den Cache-Speicher zu schreiben ist, mithilfe dieses neuen Werts des Schlüssels kᵤ, um ein Kryptogramm dieses Worts zu erhalten, und das Speichern des Kryptogramms im Cache-Speicher anstelle des Worts, und
- in Reaktion auf die Anforderung, die die Adresse des zu lesenden oder zu schreibenden Worts enthält, und wenn eine Zeile, die ein Zeilenetikett aufweist, das dem empfangenen Zeilenetikett entspricht, im Cache-Speicher gefunden werden konnte, das Entwürfeln (315) des Kryptogramms dieser Zeile mithilfe des Werts des Schlüssels kᵤ, der zur gleichen Zeit wie der Wert des Parameters q erzeugt wird, der dafür genutzt wird, die umgewandelte Mengenadresse zu erhalten, die es gestattet hat, diese Zeile auszuwählen.

12. Einheit (14; 200) zur Verwaltung eines Cache-Speichers eines elektronischen Rechners, wobei diese Einheit dazu ausgebildet ist, die folgenden Schritte im Verlauf der Ausführung, durch diesen Rechner, eines Prozesses, der ein Wort verarbeiten soll, durchzuführen:
a) das Empfangen einer Anforderung, die eine Adresse des zu lesenden oder zu schreibenden Worts enthält, diese Adresse umfassend:
- ein Zeilenetikett (Tᵣ),
- eine Mengenadresse (@_{Si,r}), wobei diese Mengenadresse zu einer ersten Menge von s verschiedenen Werten gehört, wobei die Zahl s eine Ganzzahl größer als zwei ist,
b) das Umwandeln der empfangenen Mengenadresse in eine umgewandelte Mengenadresse mithilfe einer bijektiven Umwandlungsfunktion (40), die mindestens zwei Werte der ersten Menge permutiert,
c) das Auswählen einer oder mehrerer Zeilenetiketten, die im Cache-Speicher an der umgewandelten Mengenadresse gespeichert sind,
d) das Vergleichen des empfangenen Zeilenetiketts mit dem oder den Zeilenetiketten, die in Abhängigkeit von der umgewandelten Mengenadresse ausgewählt sind, um zu bestimmen, ob eins dieser ausgewählten Zeilenetiketten dem empfangenen Zeilenetikett entspricht,
e) wenn keins der ausgewählten Etiketten dem empfangenen Zeilenetikett entspricht, das Auslösen eines Cache-Fehlers und das Bereitstellen des Worts aus einem höherrangigen Speicher, und wenn, im Gegenteil, eins der ausgewählten Zeilenetiketten dem empfangenen Zeilenetikett entspricht, das Lesen oder Schreiben des Worts in den Cache-Speicher innerhalb der Zeile, die dem Zeilenetikett zugeordnet ist, das dem empfangenen Zeilenetikett entspricht,
f) das Verändern der Umwandlungsfunktion, wobei dieses Verändern der Umwandlungsfunktion im Verlauf der Ausführung des Prozesses mehrmals wiederholt wird, so dass im Verlauf derselben Ausführung des Prozesses die Umwandlungsfunktion mit der Zeit einer selben Mengenadresse, die empfangen werden kann, nacheinander mehrere verschiedene umgewandelte Mengenadressen zuordnet, **dadurch gekennzeichnet, dass**:
- die Verwaltungseinheit eine Umwandlungsfunktion (40) aufweist, die durch einen Parameter q so parametriert ist, dass die umgewandelte Mengenadresse, die beim Schritt f) erhalten wird, zugleich von der empfangenen Mengenadresse und dem Wert dieses Parameters q abhängt, und für alle Werte ungleich null des Parameters q die Umwandlungsfunktion mindestens 50 % der Mengenadressen permutiert, und
- die Verwaltungseinheit dazu ausgebildet ist, bei jeder Ausführung des Schritts f) einen neuen Wert des Parameters q zu erzeugen, um die Umwandlungsfunktion zu verändern.

## Claims

1. Method for managing a cache memory of an electronic computer, this method comprising the following steps during the execution, by this computer, of a process that has to process a word:
a) receiving (100, 130) a request containing an address of the word to be read or to be written, this address comprising:
- a line tag (Tᵣ),
- a set address (@_{Si,r}), this set address belonging to a first set of s different values, wherein the number s is an integer greater than two,
b) transforming (104, 134) the received set address into a transformed set address using a bijective transformation function that permutes at least two values of the first set,
c) selecting (106, 136) one or more line tags recorded in the cache memory at the transformed set address,
d) comparing (108, 138) the received line tag with the selected line tag or tags on the basis of the transformed set address, in order to determine whether one of these selected line tags corresponds to the received line tag,
e) when none of the selected tags corresponds to the received line tag, triggering (118, 142) a cache error and providing the word from a superordinate memory, and when, by contrast, one of the selected line tags corresponds to the received line tag, reading or writing the word from or to the cache memory within the line associated with the line tag that corresponds to the received line tag,
f) modifying (86; 286) the transformation function, this modification of the transformation function being repeated multiple times during the execution of the process such that, during the same execution of the process, the transformation function successively associates, over time, multiple different transformed set addresses with one and the same set address liable to be received,
**characterized in that**:
- the transformation function is parameterized by a parameter q such that the transformed set address obtained in step f) depends both on the received set address and on the value of this parameter q, and for all nonzero values of the parameter q, the transformation function permutes at least 50% of the set addresses, and
- during each execution of step f), a new value of the parameter q is generated in order to modify the transformation function.

2. Method according to Claim 1, wherein:
- a modification counter is incremented (88) upon each modification of the transformation function,
- each time a new line is recorded in the cache memory, the current value of the modification counter is recorded (94) in a line counter associated only with this line,
- when one of the selected line tags corresponds to the received line tag, then the method comprises:
• comparing (110) the value of the line counter of the line containing this line tag with the value of the modification counter,
• when the value of the line counter is less than Cₘ-M, then reading or writing of the word from or to the cache memory is inhibited and a cache error is triggered (118, 142) and
• by contrast, when the value of the line counter is greater than or equal to Cₘ-M, then the cache error is not triggered and reading or writing of the word from or to the cache memory is continued (116, 140),
wherein:
- Cₘ is the value of the modification counter at the time when the value of the line counter is compared with the value of the modification counter, and
- M is an integer between 1 and 50.

3. Method according to Claim 2, wherein the method comprises:
- marking (89) the set of lines of the cache memory as being invalid in response to the modification counter crossing a predetermined threshold, and
- inhibiting the use of each line marked as being invalid until it is replaced by a new line loaded from the superordinate memory.

4. Method according to any one of the preceding claims, wherein:
- upon each modification of the transformation function, the previous value of the parameter q is recorded (88) in a queue containing the R previous values of the parameter q, where R is an integer between 1 and 50,
- when none of the selected line tags corresponds to the received line tag and before triggering a cache error and before providing the word from the superordinate memory, one of the previous values of the parameter q is selected (118, 142) from the queue and steps b) to e) are executed again using the previous value selected for the parameter q instead of the current value of this parameter q.

5. Method according to Claim 4, wherein, when a line tag corresponding to the received line tag is found in the cache memory using one of the previous values of the parameter q, the method comprises replacing (120, 142; 320, 342) one of the lines of the set located at the transformed set address obtained from the most recent value of the parameter q with the line associated with this line tag corresponding to the received line tag.

6. Method according to Claim 4 or 5, wherein the number R is between 4 and 16.

7. Method according to Claims 2 and 4 taken together, wherein the number M is equal to the number R.

8. Method according to any one of the preceding claims, wherein:
- a counter of access operations to the cache memory is incremented (87) upon each access operation to the cache memory, and
- when this counter of access operations to the cache memory reaches a predetermined limit, a new execution of step f) is automatically triggered and the counter of access operations to the cache memory is reinitialized, the predetermined limit being equal to a number of access operations to the cache memory of between 100 and 1000.

9. Method according to any one of the preceding claims, wherein each new value of the parameter q is generated (88) through a random draw or pseudorandom draw of this new value from a set of 2^{p} possible different values for the parameter q, wherein the exponent p is an integer greater than or equal to 4, 8 or 16.

10. Method according to any one of the preceding claims, wherein the method comprises, during the simultaneous execution, by the computer, of a first and a second process that respectively process a first and a second word:
- executing step f) (286) for the first and second process, respectively, and thus obtaining a first value of the parameter q for the first process and a second value of the parameter q for the second process, these first and second values of the parameter q being recorded and associated, respectively, with the first and second process,
- when the first process reads or writes the first word, executing steps a) to e) using the first value of the parameter q to do so,
- when the second process reads or writes the second word, executing steps a) to e) using the second value of the parameter q to do so.

11. Method according to any one of the preceding claims, wherein the method also comprises:
- each time a new value of the parameter q is generated, generating (286) a new value of a key kᵤ, and then
- for as long as the value of the parameter q is not modified again, scrambling (339) each word to be written to the cache memory using this new value of the key kᵤ in order to obtain a cryptogram of this word and recording the cryptogram in the cache memory in place of the word, and
- in response to the request containing the address of the word to be read or to be written and if a line containing a line tag corresponding to the received line tag was able to be found in the cache memory, descrambling (315) the cryptogram of this line using the value of the key kᵤ generated at the same time as the value of the parameter q used to obtain the transformed set address that allowed this line to be selected.

12. Unit (14; 200) for managing a cache memory of an electronic computer, this unit being configured so as to perform the following steps during the execution, by this computer, of a process that has to process a word:
a) receiving a request containing an address of the word to be read or to be written, this address comprising:
- a line tag (Tᵣ),
- a set address (@_{Si,r}), this set address belonging to a first set of s different values, wherein the number s is an integer greater than two,
b) transforming the received set address into a transformed set address using a bijective transformation function (40) that permutes at least two values of the first set,
c) selecting one or more line tags recorded in the cache memory at the transformed set address,
d) comparing the received line tag with the selected line tag or tags on the basis of the transformed set address, in order to determine whether one of these selected line tags corresponds to the received line tag,
e) when none of the selected tags corresponds to the received line tag, triggering a cache error and providing the word from a superordinate memory, and when, by contrast, one of the selected line tags corresponds to the received line tag, reading or writing the word from or to the cache memory within the line associated with the line tag that corresponds to the received line tag,
f) modifying the transformation function, this modification of the transformation function being repeated multiple times during the execution of the process such that, during the same execution of the process, the transformation function successively associates, over time, multiple different transformed set addresses with one and the same set address liable to be received,
**characterized in that**:
- the management unit comprises a transformation function (40) parameterized by a parameter q such that the transformed set address obtained in step f) depends both on the received set address and on the value of this parameter q, and for all nonzero values of the parameter q, the transformation function permutes at least 50% of the set addresses, and
- the management unit is configured so as, during each execution of step f), to generate a new value of the parameter q in order to modify the transformation function.
